(19) Europäisches Patentamt
European Patent Office
Office européen des brevets

(11) **EP 2 083 637 B1**

(12) **EUROPEAN PATENT SPECIFICATION**

(45) Date of publication and mention
of the grant of the patent:
**18.06.2014 Bulletin 2014/25**

(21) Application number: **07834616.0**

(22) Date of filing: **03.10.2007**

(51) Int Cl.:
*A23J 3/22* (2006.01)          *A23J 3/14* (2006.01)
*A23L 1/325* (2006.01)        *A23L 1/317* (2006.01)
*A23L 1/314* (2006.01)

(86) International application number:
**PCT/NL2007/050478**

(87) International publication number:
**WO 2008/041845 (10.04.2008 Gazette 2008/15)**

(54) **FIBROUS FOOD MATERIAL**

FASERIGE NAHRUNGSMITTELSUBSTANZ

MATIÈRE ALIMENTAIRE FIBREUSE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **03.10.2006 EP 06076818
18.10.2006 EP 06076895
09.02.2007 EP 07102099**

(43) Date of publication of application:
**05.08.2009 Bulletin 2009/32**

(73) Proprietor: **Friesland Brands B.V.
3818 LE Amersfoort (NL)**

(72) Inventors:
• **MANSKI, Julita Maria
NL-6701 DK Wageningen (NL)**
• **VAN DER ZALM, Elizabeth Egberdina Johanna
NL-6708 PG Wageningen (NL)**
• **BOOM, Remko Marcel
NL-6712 CG Ede (NL)**
• **VAN DER GOOT, Atze Jan
NL-6717 TR Ede (NL)**
• **NIEUWENHUIJSE, Johannes Andries
NL-7207 NA Zutphen (NL)**
• **PAQUES, Marcel
NL-3941 DM Doorn (NL)**

(74) Representative: **Hatzmann, Martin
V.O.
Johan de Wittlaan 7
2517 JR Den Haag (NL)**

(56) References cited:
**EP-A- 1 085 023          EP-A2- 0 340 035
EP-A2- 0 420 165         EP-A2- 0 821 881**

• **MUGURUMA M ET AL: "SOYBEAN AND MILK
PROTEINS MODIFIED BY TRANSGLUTAMINASE
IMPROVES CHICKEN SAUSAGE TEXTURE EVEN
AT REDUCED LEVELS OF PHOSPHATE" MEAT
SCIENCE, ELSEVIER SCIENCE, GB, vol. 63, no.
2, February 2003 (2003-02), pages 191-197,
XP009062064 ISSN: 0309-1740**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to fibrous materials, and especially to fibrous food materials, processes for the production thereof, and the use of said fibrous materials. In an important aspect, the present invention aims to provide meat or fish replacement products from alternative protein sources. In another aspect, loose fibrous particles are used as an ingredient having various uses of application.

The last decades, the formation of fibrous food textures has received much interest from industry as well as from food scientists. A particularly important challenge was to replace meat products by products from alternative protein sources. Generally, this implies creating meat-like structural and sensory properties with non-meat protein-based materials; that is, starting from non-meat protein-based sources anisotropic structures at various length scales and in various concentration regimes were aimed at.

The research carried out on fibrous protein materials can roughly be divided into the self-assembly of proteins into fibrils, and the forced assembly of proteins into fibrous textures.

Fibrillar self-assembly of various proteins, such as β-lactoglobulin, ovalbumin and bovine serum albumin proteins, has been achieved in diluted and semi-diluted regimes under severe pH and temperature conditions (see, e.g. Veerman et al., J. Rheol. 49(2) (2005) 355-368). The fibrils produced were in the order of nm thickness and μm length.

A special case of self-assembly was reported for the amyloid fibril formation of κ-casein (Thorn et al., Biochemistry 44(51) (2005) 17027).

In contrast to self-assembly, forced assembly of protein solutions in a more concentrated regime (> 10% w/w protein) has been approached traditionally using extrusion or spinning techniques, although also other techniques were described.

Extrusion cooking has been used for texturizing proteins from various sources, such as soy flours, wheat, and dairy proteins. Plasticization, melting and break-up of proteins occur in the extruder barrel and fibrous textures can be formed due to alignment of the proteins in long cooling dies. See in this light, *e.g.,* Aguilera & Stanley, Food Rev. Int. 9(4) (1993) 527-550; and Cheftel et al., Food Rev. Int. 8(2) (1992) 235-275.

In these embodiments, the ratio value of the longitudinal and transversal resistance to stretching is - according to Thiebaud et al. (Food Science And Technology-Lebensmittel-Wissenschaft & Technologie 29(5-6) (1996) 526-535) - indicative of fiber quality. Typical ratio values of the longitudinal and transversal resistance to stretching are, for instance, 1-5 for fibrous extrudates from defatted soy flour, depending on barrel temperature and pH (Cheftel *et al., ibid.*); and 1-2 for extrudates of defatted soy flour and pork as determined by cutting (Liu et al., Food Sc. Techn. Int. 11(6) (2005) 463-470).

The studies referred to in the two previous paragraphs show that blends of animal and vegetable sources are needed to obtain an acceptable degree of fibrousness.

Tolstoguzov (in: J.A.O.C.S., 70(4) (1993) 417-424) underlined that incompatible biopolymers are required to form anisotropic structures during extrusion.

In US-A-4,118,520, protein fibers are prepared, which contain casein and at least one heat-settable protein, by dry-spinning an aqueous protein mixture containing calcium and phosphate ions at a temperature below the gelling point of the protein mixture, followed by drying the fibers obtained.

US-A-2,830,902 and its continuation-in-part US-A-2,879,163 describe that a suspension of protein-rich raw material is coagulated under the influence of heat to form a protein gel, which gel is shaped into by extrusion using a macaroni press.

In general, the extrusion techniques have a number of shortcomings, such as the use of high temperatures for protein denaturation, which induces non-controllable chemical reactions; and use of high shear forces during extrusion, which can lead to break-up of structural elements (see, *e.g.,* Peighambardoust et al., J. Cereal Sc. 43 (2006) 183-197), even at a molecular level (see Van den Einde et al., Polymer Degradation And Stability, 85(1) (2004) 589-594). Moreover, in extruders, just like in many other mixing or kneading devices, different effects for physical and/or chemical processes are obtained dependent on the position in the apparatus.

In order to obtain well-defined fibrous products, it is clear that there should be a subtle interplay between break-up and texture induction in structural elements. The present invention aims to provide a process which allows obtaining well-defined fibrous products..

Moreover, products prepared by extrusion cooking are generally heated at temperatures above 100°C. Such products can be heated, but cannot be processed in the kitchen using techniques like baking and frying, which would lead to effects also obtained with fish and meat.

The other technique mentioned herein-above, *viz.* spinning of biopolymers, is based on aligning macromolecules due to shear and elongational flow in a spinneret and during coagulation (see, *e.g.,* Gallant et al., Food Microstructure 3 (1984) 175-183). Typically, resulting fibers (~100 μm) are coagulated in baths containing acid and salt solutions, and washed afterwards. Hydrocolloids, such as carrageenan (Downey & Burgess, J. Food Techn. 14(1) (1979) 21-31; Downey & Burgess, J. Food Techn. 14(1) (1979) 33-40) and alginate (Antonov et al., Die Nahrung 29(1) (1985) 39; Suchkov et al., Nahrung-Food 24(9) (1980) 893-897), or vegetable proteins, such as soy (Suchkov et al., Nahrung-Food 32(7) (1988) 669-678) or field bean protein (Suchkov et al., Nahrung-Food 32(7) (1988) 679-689), were used in combination with casein in a two-phase blend in order to decrease the solubility in water of the casein-based fibers produced.

US-A-2,682,466 describes edible protein fibers made by a wet-spinning process. A protein-rich raw material is dissolved in an alkaline medium, and subsequently extruded in the form of thin jets into an acidic salt bath in which the fibers coagulate.

Disadvantages of this spinning method remain the large water waste streams from the coagulation and washing baths. Further, the necessity of low pH and high salt concentrations, and chemical additives to coagulate the fibers make the design of a process and an apparatus for production of fibers suitable for consumption a complex matter. Further, the combination of fibers obtained through spinning to a fibrous structure is complex, if at all feasible.

In NL-C-1019816 products are prepared, which products are aimed to replace meat and fish, and can be baked. These products are prepared from curd, which is mixed with alginate and/or phosphate in water, said mixture being emulsified and subsequently being vigorously stirred in a salt solution. Thereafter the fibrous product obtained is washed and additionally the water is removed. The method described has similar disadvantages as the afore-described spinning method.

Also in WO 2005/004624 and WO 2005/004625, homogeneous mixtures of protein (milk and vegetable proteins, respectively) and a hydrocolloid that precipitates when brought into contact with metal ions having a charge of at least +2 are brought into contact with a solution containing such metal ions to form shaped fibre containing food products.

The products obtained in the methods of the two previous paragraphs obtain a structure based on the gelled hydrocolloids.

Further background art includes crosslinking of proteins with transglutaminase, to obtain protein products for different uses, not involving fibrous textures for meat or fish replacement. Reference is made to EP 1 085 023 which relates to a process for partially crosslinking proteins using transglutaminase. The aim is to provide crosslinked proteins useful in foodstuffs as a thickener or a binder. The material is obtained from a continuously stirred reactor or a fixed bed reactor, the latter being preferred. Also EP 0 821 881 is referred to, which pertains to a milk whey protein-containing powder useful in paste food and emulsified food. The milk whey protein is reacted in solution with a transglutaminase.

Other background art includes protein micro-fiber structures, such as EP 0 340 035. The process described herein involves grinding xanthan/protein complex fibers and subjecting the ground fibers to high shear so as to obtain micro fibers. The resulting product can be used in foodstuffs, e.g. on the basis of meat components. It does not itself have a meat or fish replacement structure.

EP 0 420 165 refers to a fundamentally different type of meat or fish replacement, viz. on the basis of comminuted meat or fish protein, involving a process of restructuring the proteins to muscle-like structures. This type of replacement obviously is not suitable where it is desired to use non-meat protein sources. Further, other than globular proteins and casein, the original meat proteins used herein are fibrous proteins *per se.*

It is an object of the present invention to provide a method for preparing fibrous food structures and textures, wherein the problems identified herein-above have been overcome.

It is a further object of the present invention to prepare products and especially soft-solid products having an appearance and a behaviour comparable with meat and fish. In particular, a composition comprising a hierarchical fibrous structure is desired.

In this light, hierarchical structures imply that structures of higher and higher levels of organization are progressively assembled from the molecular to the macro scale until the desired properties and functions are achieved. Adapted from: J.M. Aguilera, S.W. Stanley, (1999), Microstructural principles of food processing and engineering, 2nd ed, Aspen Publishing, Inc, Gaithersburg, Maryland, (ISBN 0-8342-1256-0), page 186-187.

As defined herein, a soft-solid food product is a food product that primarily exhibits elastic deformation (elastic deformation: G'>G") upon applying a stress, and in which a relatively small stress is needed to obtain a substantial deformation, either due to low elastic modulus or small yield stress. Further details on soft-solid food products are described in: P. Walstra (2003) Physical Chemistry of Foods; Chapter 17: Soft-solids; Marcel Dekker, New York.

The appearance and/or behaviour comparable with meat and fish relates preferably both in the ability of processing during cooking, including frying and stir-frying, and in consumption. Particularly, the structure of the invention will shorten during heating which gives a behaviour that is similar to what happens with chicken meat.

Furthermore, it is desired to provide a fibrous food material having good ab- and ad-sorption properties for taste and aroma compounds, such as herbs and seasoning compounds.

Other objects of the present invention will occur after reading the remainder of the description including the working examples.

The objects of the present invention are met by the use of a technology based on application of simple shear flow and concurrent enzymatic cross-linking to induce an anisotropic fibrous structure in a concentrated protein, and most preferred in a concentrated calcium caseinate composition, without the necessity of coagulation baths, and without having to apply high temperatures or high shear forces. Moreover, the number of washing steps can considerably be reduced and oftentimes, no washing steps are required, at all.

In a first aspect, the present invention relates to a process for the preparation of hierarchical fibrous food structures, comprising subjecting an edible protein suspension to simple shear flow and enzymatic cross-linking. The enzymatic cross-linking is carried out concurrently with the simple shear flow operation.

The process of the present invention relies on a specific kind of deformation, being simple shear. The term "simple shear" is well-known in the art and implies that material planes slide over each other in only one direction. Reference is made in this respect to C.W. Macosko, "Rheology, Principles, Measurements and Applications", VCH Publishers Inc., New York (1994), in particular pages 27-29, 40 and 70-75; this reference is referred to for the aim of defining the "simple shear" concept.

Where many of the above-identified prior art processes relate to phase-separated systems of protein and polysaccharide wherein alignment in the one phase is imposed, or rather held fixed, by the other phase, encompasses the present invention an alignment of protein material in a protein/water mixture. That is, alignment and fibrous structure formation occur in one and the same phase according to the present invention. The structure obtained with the invention does not require fixation in a separate matrix as do prior art processes based on gelation.

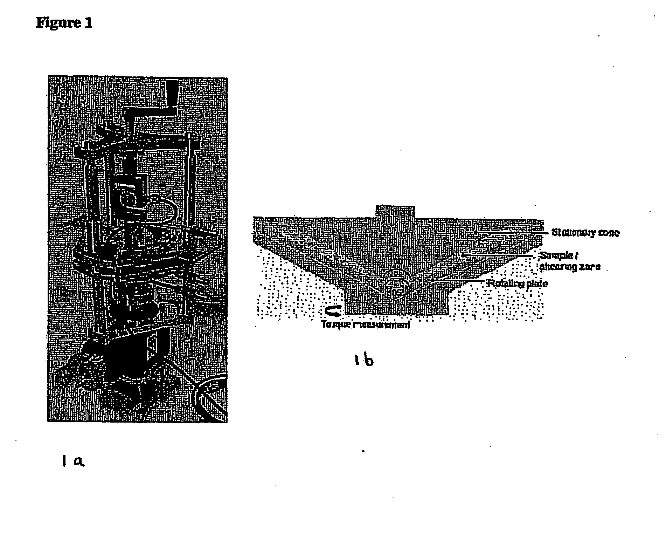

In the process of the present invention, a protein suspension is subjected to a simple linear shear profile, which can for instance be established between a plate and a cone; between a cone and a cone; or in a couette, cone and plate reactor. An example of a suitable apparatus is depicted in Figure 1, wherein Figure 1a shows a photograph of a lab-scale cell device, and Figure 1b is a schematic drawing of the shearing zone of said apparatus. Particularly, the polymers may be subjected to a simple linear shear profile by using, in the embodiment of Figure 1, a plate and a cone, wherein the angle $\alpha_{place}$ is for instance about 105°, and the $\alpha_{cone}$ for instance 100°. The shear cell device of Figure 1 has a volume of approximately 70 ml. The rotating plate and stationary cone are heated (or cooled) with water. The temperature of the material is measured with a thermo couple located in the cone. The device is attached to a Brabender Do-Corder 330 (Brabender OHG, Duisburg, Germany) to enable shear rate control, and torque and temperature readings. The apparatus of Figure 1 is based on the apparatus described by Peighambardoust et al. in: Journal of Cereal Science. 42(1) (2005) 59-68, which document is incorporated herein by reference for further definition of the apparatus suitable for use in the present invention.

The stresses applied during shearing should not lead to break-up of the proteins. Generally, the stresses applied should not exceed 25 kPa, preferably not exceed 20 kPa (calculated based on projected radius of the plate).

In this process, the simple shear flow leads to alignment of the proteins, while the enzymatic cross-linking leads to solidification.

Of course, small deviations of a simple shear flow profile, which still give fibrous materials, are also encompassed by the present invention.

Based on the knowledge of the present invention, it is conceivable, though not preferred, to realize the simple shear profile in a "non-shear equipment", i.e. an equipment not normally used for applying shear, such as a mixer. In such an equipment, processing domains can exist in which in fact simple shear occurs. If such is done, care should be taken to obtain - e.g. from the walls of the stirred equipment - only those portions of the material which have been subject to the simple shear domain in the non-shear equipment. Also, if a non-shear equipment such as a mixer is used, the order of adding the components will be more critical for the formation of fibrous structures. In such an equipment, the liquid phases (water, oil), and the enzymatic crosslinker, are to added prior to the protein. It is conceivable that for some uses a material could suffice of which only parts are anisotropic (and are e.g., contained in an isotropic matrix).

The simple shear processing step is preferably carried out with protein material that has no denaturation temperature, such as with calcium caseinate (see also herein-below), or preferably carried out at a temperature lower than the denaturation temperature of the protein material. As to the simple shear *per se* the lower limit of the temperature is not critical, as long as the protein solution or dispersion is capable of flowing. Effectively, a modest heating step leads to a quicker alignment. The temperature requirements for the concurrent enzyme cross-linking may be more critical. In practice, the process of the invention is suitably carried out in the temperature range of about 15-60°C, preferably from ambient temperature, *i.e.* from 20-25°C, up to 55°C, and more preferably in the temperature range of 35-50°C.

The process of the invention requires rather dense protein solutions or dispersions, preferably in water or at least in aqueous systems, although other non-denaturing solvents may also be used. Preferably, the concentration of protein is at least 5 wt. %, preferably at least 10 wt.%, more preferably at least 15 wt.% and even more preferably at least 20 wt.%, drawn on the weight of the entire solution or dispersion; in the best modes found thus far preferably at least 25 wt.%, and more preferably 30 wt.% and higher of protein is used. The upper limit of the protein concentration is governed by the requirement that the protein material must be sufficiently movable to be aligned in the medium. This can easily be determined by the person skilled in the art on the basis of the present application. In practice, protein contents will not be higher than about 60 wt.% and preferably not higher than 50 wt.%.

In a preferred aspect of the invention the edible protein is based on casein, and particularly on bovine milk caseins. Bovine milk casein consists mainly of $\alpha_{S1}$-, $\alpha_{S2}$-, $\beta$- and $\kappa$-casein in the ratio 4:4:2:1. The serine and threonyl phosphates of $\alpha$- and $\beta$-caseins can interact with calcium ($Ca^{2+}$) and other di- and trivalent ions. Due to this interaction, calcium caseinate dispersions contain protein aggregates that are comparable with casein micelles (~100-300 nm) in milk; sodium caseinate has a more open tertiary structure and forms protein aggregates of about 50 nm.

Because of the larger protein aggregates in caseinate dispersions containing di- and higher valent cations, which cations must be safe for consumption, and most preferably containing calcium ions, di- and higher valent cation forms of caseinates are especially preferred for use in the present invention. However, also (deflavored) soya and other vegetable proteins derivable from oleaginous seeds; vegetable proteins in general, whey protein concentrates (WPC powders), whey permeates, milk proteins, caseins, potato proteins, ovalbumines and mixtures of such proteins can be used.

For protein-cross-linking a relatively large number of types of enzymes is eligible in principle, such as protein disulfide isomerase, sulfhydryl oxidases, polyphenol oxidases, lysyl oxidases, peroxidases, transglutaminases, mushroom tyrosinase, lipoxygenases and glucose oxidases. The mentioned enzymes catalyze different reactions, and depending on the proteins present in the starting products to be aligned, a skilled worker can select suitable enzymes. Very suitable are transglutaminase, peroxidase and glucose oxidase, *inter alia* because of their availability.

In a preferred embodiment, a transglutaminase is used as the protein-cross-linking enzyme. Two types of transglutaminase are known: animal and microbial. Contrary to animal transglutaminase, the activity of microbially produced transglutaminase is independent of the presence of calcium ions. The enzyme transglutaminase catalyzes specific cross-linking reactions between proteins. More in particular, a glutamine group of a protein molecule is bound - via a covalent bond - with a lysine group of a protein molecule, whereby intermolecular bonds can be formed.

As said, a preferred protein to be used in the process of the invention is based on casein, and more preferably is calcium caseinate. Caseins form a suitable substrate for transglutaminase. For a further description of this enzyme, reference is made to the articles by Lorenzen and Schlimme in the Bulletin of the IDF 332, pages 47-53, in Kieler Milchwirtschaftliche Forschungsberichte 49(3) 221-227 (1997), and in Nahrung-Food 42(3-4) (1998) 151-154, to Nonaka et al., J. Food Sc. 57(5) (1992) 1214, and to EP-A-0 610 649. Transglutaminase is commercially available, *inter alia* from Ajinomoto Co., Inc. Tokyo, Japan.

A solidification using a cross-linking enzyme was found by the present inventors to be essential for obtaining the desired anisotropic structure formation. The fibrous materials obtained by the process of the invention showed anisotropy both on micro- and macroscale as can be determined with scanning electron microscopy (SEM) and mechanical analyses, respectively.

SEM revealed protein fibers with a diameter of ~100-200 nm, whereas visually, fibers of up to 1 mm were observed.

Both simple shear and the cross-linking enzyme, preferably transglutaminase, affected the reinforcement of the fibers to a large extent, whereas the mechanical properties in the perpendicular direction to the shear flow remained constant.

The rheological properties were isotropic and were only affected by the cross-linking enzyme.

After shearing Ca-caseinate without transglutaminase, a slightly anisotropic layered structure was found but no fibers were formed. Both cross-linking in the absence of shear, and cross-linking during mixing resulted in Ca-caseinate gels without any alignment.

Hence, the present invention is based on a synergistic effect obtained by the combined application of simple shear and cross-linking by means of an enzyme. This effect is illustrated in Table 2 in Example 1, herein-below, for Ca-caseinate using simple shear and transglutaminase (TGA; also referred to as TGase). Values are obtained of the tensile properties, normalized with corresponding values of Ca-caseinate samples so that the effect of shear (sheared and cross-linked Ca-caseinate normalized with cross-linked Ca-caseinate under quiescent conditions), and of TGA (sheared and cross-linked Ca-caseinate normalized with sheared Ca-caseinate without TGA) could be deduced. Both shear and TGA affected the tensile properties in the parallel direction to a large extent, thus in the direction of the anisotropic microstructures. Moreover, considering the normalized yield stress values, the reinforcing effect of shear (in the presence of TGA) was almost twice as large as the effect of TGA only.

In the process of the present invention, a layered structure is formed. Particularly, the enzymatic cross-linking during simple shearing changes the morphology of the protein aggregates into fibers.

In a second major aspect, the present invention hence relates to a fibrous hierarchical edible protein structure, having anisotropy on microscale (that is, having an oriented structure when studying the morphology using SEM) and on macroscale (that is, having an oriented structure when studying the morphology on the eye). The anisotropy on macroscale can also be determined using tensile strength test; for anisotropy on macroscale different tensile strengths are obtained when measuring the test piece in different directions.

These protein structures behave like meat and even show browning upon baking. To make this browning more explicit, a small content of reducing sugars, preferably lactose, may be added.

In a third major aspect, the present invention relates to loose fibrous particles having an anisotropic fiber form suitable to be used as an ingredient for food applications. Because of the particulate character, these particles have a viscosity increasing effect. These particles allow to control the viscosity of a product over a wide range, including very liquid up to almost solid products.

**EP 2 083 637 B1**

In addition, the fibrous particles may influence the flow behaviour of (thick) liquid products. The anisotropic character of the particles provide an additional effect to the increase in the inertia of the systems wherein such fibers are used. Similar effects apply to more solid systems having a yield behaviour. By fine tuning of the structure of the protein; that is, by providing a structure with a higher or lower amount of anisotropy on micro or macro scale, products having the same protein content may be prepared that have an entirely different viscosity and/or flow behaviour.

The anisotropic character of the dispersed phase may also give the opportunity to provide a shear thinning behaviour and, optionally yielding behaviour to a product. That is, when a thick product is subjected to shear, the viscosity of said product decreases. A thick product may become flowable or spoonable and may subsequently become thick again.

As mentioned above in respect of "non-shear equipment" it is conceivable for some applications to obtain a material in which anisotropic parts are contained in an isotropic matrix. An example of this is also a method to prepare loose fibers, i.e. fibers that are not necessarily part of a hierarchical structure, but which are largely separate from each other by a matrix. In order to prepare such loose fibers, it seems essential to have an additional phase present in the suspension to be sheared. Particularly, polysaccharides or proteins that will not enter in chemical couplings, may create loose fibers. Having this additional phase present, a more loose relation in the hierarchical organisation occurs, which may end up in loose fibers. Hence, dependent on the presence of a further phase present in the suspension, and dependent on the processing parameters a hierarchical structure or loose fibers, or a whole grey area between loose fibers and hierarchical structure, may be obtained. See in this light also working example 3 herein-below.

Suitable polysaccharides to be used in this process are xanthan, carrageenan, galactomannan, guar gum, tara gum, carob bean gum, gum arabic, pectin, cellulose, including carboxy methylcellulose (CMC), methylcellulose (MC), and hydroxy propylcellulose (HPC), and starches, including modified starches.

The polysaccharides allow to reduce the protein content in the suspension to be processed according to the invention and/or allow variation in the coherency and/or tissue forming capability of the fibers and may ultimately lead to the formation of loose fibers.

Suitable amounts of such proteins or polysaccharides to be added to the suspension are generally in the range of 0.01-5 wt.%, preferably 0.05-3 wt.%, more preferably 0.1-1.5 wt.% and/or the amount (in weight) of further protein or polysaccharide relative to the weight of protein to be aligned is in the range of 1:1000-1:5, preferably 1:500-1: 8, more preferably 1:100-1:10.

In a preferred embodiment these fibrous structures are obtainable by the process of the invention.

Highly preferred are fibrous structures based on caseinate cross-linked by transglutaminase.

The anisotropic fibrous samples of the present invention are much stronger in the parallel direction compared to the perpendicular direction. This can especially be reflected by the yield stress ratio. In a preferred embodiment, the fibrous structure of the invention has a yield stress ratio $\sigma_{parallel}/\sigma_{perpendicular}$ of at least 6, preferably at least 7 and most preferably at least 8. For calcium caseinate, the yield stress ratio $\sigma_{parallel}/\sigma_{perpendicular}$ may suitably be about 9.

The formation of shear- and enzyme-induced anisotropic structures was explained by enhanced phase separation of protein aggregates due to shear and concurrent solidification of the aligned protein aggregates.

The enzymatic gelation of calcium caseinate using simple shear and enzymatic cross-linking induces a novel fibrous protein structure. The resulting microstructural properties were studied with SEM analysis. Structural characteristics are revealed with small and large deformations leading to desired linear viscoelastic properties and desired mechanical properties, which will herein-below be described in more detail for calcium caseinate structures cross-linked with transglutaminase.

In practice, first a solution or dispersion of protein in a suitable medium, preferably an aqueous medium, is made as a pre-mix. This premix is transferred to a shear cell, and preferably heated to a temperature between 35 and 50°C. Cross-linking enzyme is either introduced in the shear cell or preferably already to the premix, and the mixture is subjected to simple shear. For optimal results, that is for a well-defined shear field, a complete filing of the shear cell is required. The shear must be sufficiently high to effect alignment of the protein material, but not too high, because the structure may then break.

According to the invention, an anisotropic fibrous protein structure, and preferably an anisotropic Ca-caseinate structure, was formed using a technology based on shear-induced structure formation and concurrent solidification. Enzymatic cross-linking during shearing appears essential for the anisotropic structure formation. The simplicity of the method combined with the high anisotropy obtained show the high potential of the technology for novel food structures and applications.

As said cross-linking during shearing is essential, the adjustment of enzyme type and activity, shear rate and processing time, on a particular protein used, depends on the particular protein. For an aqueous medium containing 25-30 wt.% calcium caseinate, for example, the minimal shear rat in the apparatus shown in Figure 1 (see herein-below) using transglutaminase (TGA) is 24 $s^{-1}$, the processing time being between 300 and 3600 seconds. The optimum temperature is determined by the enzyme used. For TGA, this is about 50 °C.

In the working examples herein-below, calcium caseinate in combination with TGA is used as a model system for the invention. It is shown that after shearing and enzymatic cross-linking using TGA, anisotropic fibrous structures were formed in a concentrated Ca-caseinate matrix on macro- and microscale. Fibers of up to 1 mm were visually observed, whereas SEM images revealed protein fibers with a diameter of ~50-200 nm, which were composed of chained protein domains.

In the absence of TGA, a layered and slightly anisotropic structure was found but no fibers were formed. Cross-linking in the absence of shear resulted in a strong Ca-caseinate gel without any alignment. The LVE properties showed an increase of $G$' and a decrease of tan$\delta$ due to addition of TGA. These properties were isotropic (*i.e.* independent of the direction of strain).

In contrast, tensile properties confirmed the presence of anisotropic structures, especially based on large differences between the yield stress values in the parallel and perpendicular directions compared to the applied shear flow (see herein-below). Shear affected the reinforcement of the anisotropic fibers to a large extent, whereas the properties in the perpendicular direction remained constant. TGA also influenced the structure formation in the shear direction significantly.

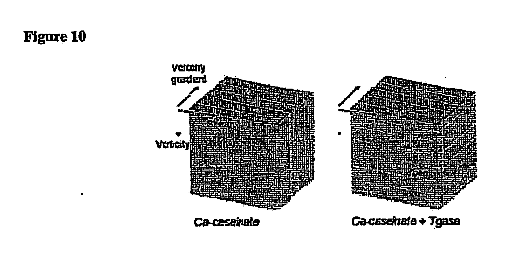

When shearing a concentrated protein dispersion, a layered structure was formed, which is schematically depicted in Figure 10. Enzymatic cross-linking during shearing changed the morphology of the protein into fibers. Without wishing to be bound by any specific theory, it is hypothesized that in the process of the present invention phase separation of protein aggregates at a molecular level due to shear leads to shear- and enzyme-induced anisotropic structures. Enzymatic cross-linking is needed to solidify the aligned protein aggregates, which would possibly relax upon cessation of shear when no solidification agent is present.

In the working examples herein-below, a highly concentrated system of caseinate, wherein the casein aggregates are closely packed or in a jammed state, is used. Local phase separation into a protein-rich and protein-poor phase with a low interfacial tension, which might have been already present in the system at rest, was enhanced by shearing resulting in alignment of these phases. In the absence of TGA, the combined effects of shear and $Ca^{2+}$-interactions led to a layered Ca-caseinate macrostructure, which showed anisotropic behavior during the tensile tests. In contrast, the microstructure was hardly affected by shear. This would result in a layered structure, similarly as depicted in Figure 10A. It is likely that alignment in Ca-caseinate at microscale was present due to phase separation and shear, but that the time scale of the solidification method employed, i.e. cooling, was much longer that the relaxation time of the aligned protein assemblies. Therefore, sheared Ca-caseinate did not result in a fibrous structure. In the presence of TGA, cross-linking possibly increased the size of the Ca-caseinate aggregates, making them even more susceptible to alignment by shearing. Further, in the phase-separated protein-rich phase, TGA induced covalent bonds in the direction of the flow. Since solidification occurred at a shorter time scale than relaxation, the fibrous micro- and macrostructure was preserved after cessation of shear.

Ca-caseinate and Na-caseinate have different physical properties and therefor require different regimes to obtain anisotropic structures. The following framework is considered for differences in shear-induced structure formation of dense caseinate dispersions.

We consider the dense caseinate dispersions as systems comprising colloidal close packed soft spheres, and as semi-dilute polymer-like systems with entanglements that can be formed and disrupted depending on time and shear flow. Shear can only induce structures in these systems if its effect cannot be compensated by the mobility of the system. This indicates that the intrinsic physical properties of Ca-caseinate are such that shear-induced structure formation is favored at the time scales that we investigated.

With reference to the results obtained on the basis of Ca-caseinate, it will be apparent to the person skilled in the art how similar, new and useful anisotropic fibrous structures can be obtained on the basis of other edible proteins. Although the specific conditions may vary with the protein, the skilled person will be able to assess whether or not the conditions chosen are fit to produce the required anisotropy.

Conditions to be taken into account when addressing the invention with any given edible protein include shear rate, shear duration, temperature, shear viscosity, counter ions, protein concentration, protein particle size, strength of mutual attractive interaction, non-monotonic flow behavior, significant normal stresses.

Without theory to be considered binding, it is noted that with the knowledge of the invention, theoretical models can be applied to determine process conditions. This is illustrated with reference to Na-caseinate.

In general, shear flow will have the tendency to align structural elements towards the shear flow direction when the hydrodynamic forces dominate the Brownian motion, which is expressed by the Péclet number Macosko, C. W. (1994). Rheology: Principles, measurements, and applications. New York: Wiley-VCH:

$$Pe = \frac{6\pi a^3 \dot{\gamma} \eta}{kT} >> 1$$

The radius of the structural elements is denoted with $a$, $\dot{\gamma}$ is the shear rate, $\eta$ is the (shear) viscosity of the solutions, $k$ is Boltzmann's constant and $T$ is the temperature. The $Pe$ number summarizes the main parameters (i.e.

particle size and shear rate) that are relevant for shear induced alignment of particles, or in this case micellar proteins. When *Pe* is applied as a scaling rule for Ca- and Na-caseinate, the shear rate at which Na-caseinate will be influenced by shear flow can be predicted:

$$\dot{\gamma}_{NA} \cong \frac{\eta_{CA}(\dot{\gamma})a_{CA}^3\dot{\gamma}_{CA}}{\eta_{NA}(\dot{\gamma})a_{NA}^3}$$

Assuming that the size of Na-caseinate aggregates $a_{NA}$ is a factor 5 smaller than the size of Ca-caseinate aggregates $\alpha C_A$ (assuming $\alpha_{NA}$ ~25 nm and $\alpha_{CA}$ ~125 nm (De Kruif, C. G. (1998). Supra-aggregates of casein micelles as a prelude to coagulation. Journal Of Dairy Science, 81(11), 3019-3028. Lucey, J. A., Srinivasan, M., Singh, H. & Munro, P. A. (2000). Characterization of commercial and experimental sodium caseinates by multiangle laser light scattering and size-exclusion chromatography. Journal Of Agricultural And Food Chemistry, 48(5), 1610-1616. Dickinson, E., Semenova, M. G., Belyakova, L. E., Antipova, A. S., Il'in, M. M., Tsapkina, E. N. & Ritzoulis, C. (2001). Analysis of light scattering data on the calcium ion sensitivity of caseinate solution thermodynamics: Relationship to emulsion flocculation. Journal Of Colloid And Interface Science, 239(1), 87-97), and that there is a difference of approximately a factor 2 for the shear viscosity $\eta$ ($\eta_{CA} \approx 2 \cdot \eta_{NA}$ at a shear rate of ~ 120 s$^{-1}$), it can be deduced that the shear rate needed to induce alignment in Na-caseinate is approximately a factor $2.5 \cdot 10^2$ larger compared to Ca-caseinate.

Another criterion for shear-induced alignment is based on the Deborah number (*De*), i.e. the product of $\tau$ and the shear rate, which should exceed the value of 1: $\tau\dot{y} >> 1$(Forster, S., Konrad, M. & Lindner, P. (2005). Shear thinning and orientational ordering of wormlike micelles. Physical Review Letters, 94(1), 17803-17801-17804). The following scaling rule including interactions is then applicable:

$$\dot{\gamma}_{NA} \cong \frac{\tau_{CA}\dot{\gamma}_{CA}}{\tau_{NA}}$$

Using the *De* number as a scaling rule for Ca- and Na-caseinate, the shear rate necessary to induce alignment in Na-caseinate also can be concluded to be two orders in magnitude (10$^2$) larger compared to the shear rate needed for Ca-caseinate, which is in line with the prediction based on the *Pe* number. Both *Pe* and *De* indicate the factors that are important for shear induced structure formation, such as shear rate, shear viscosity, particle size, and protein interactions. These factors are affected by both ingredient properties and processing, which underlines the importance for the skilled person to match these aspects for structure formation of caseinates. Moreover, the use of these dimensionless numbers is in line with the mechanistic approach of caseinate systems as on the one hand close packed spheres and on the other hand entangled polymer networks.

The person skilled in the art will be aware of the importance of certain factors concerning shear-induced structure formation in industrially relevant materials:

1. Fiber formation due to shearing and enzymatic crosslinking is influenced by, e.g. the counter ion present and the protein concentration for obtaining anisotropic structures, which affect the theological behavior to a large extent.

2. Shear-induced structure formation most likely occurs if the starting material is susceptible for ordering by shear. Larger micellar structural elements and pronounced attractive interactions in Ca-caseinate compared to Na-caseinate account for the differences found in structure formation. In general, with the knowledge of the invention, it will be apparent to the person skilled in the art that, depending on the protein, the ion-concentration (such as calcium in the case of calcium caseinate) too will determine the anisotropy obtained.

3. The industrially relevant protein mixtures seem to show similarities with model materials often used to study shear-induced structure formation, such as the types of structures and the rheological behavior. The main similarities observed in latter behavior were non-monotonic flow behavior, significant normal stresses, and attractive interactions, therewith indicating that rheological measurements are useful for analyzing the structure formation capabilities of proteins. It will be understood, with the knowledge of the invention, that parameters like relaxation time and shear thinning or thickening can be used to assess, without undue experimentation, the potential suitability of a protein suspension for obtaining hierarchical fibrous structures according to the invention.

The fibrous food materials of the present invention may contain additives. Thus the mixture may comprise one or more additives, in particular one or more additives selected from the group consisting of flavours, additional nutritional ingredients, ingredients for benefiting health, and colorants. By adding one or more appropriate flavourings and/or colorants the desired taste and/or appearance can be obtained.

Other additives are, e.g., preservatives, for which sodium benzoate is a well-known example.

With the present invention, it has been found that sodium benzoate is a preferred ingredient also for facilitating the formation of fibers as desired. Without theory considered to be binding, it is the inventors' present belief that added salts, such as sodium benzoate, by increasing the ionic strength of a protein solution, have the ability to affect the protein-protein interactions, which influences the thermodynamics of the system. Particularly, in the case of calcium caseinate, salts of suitable ionic strength are able to compete with caseinate as to calcium binding. Thus, by losing some of its calcium binding, the caseinate structure is believed to lose internal coherence, and therefore becoming more receptive to shear, and beter capable of being aligned. Again, the person skilled in the art will be able in a suitably straight forward manner to determine, for a given system of proteins with or without added salts, whether the conditions chosen are sufficient to obtain the required anisotropy by simple shear.

The salt preferably comprises a monovalent cation and a food grade divalent anion Examples include salts such as known from the manufacture of processed cheese, such as sodium lactate, sodium citrate, and sodium phosphate, and other salts having a comparable affinity for calcium binding, so as to compete with the calcium bound in the protein.

. Particularly suitable are sodium -D-lactate and sodium tripolyphosphate. These salts can be used generally in a range of from 0.1 to 10 wt%, preferably 0.1 to 4 wt% and more preferably 0.1 to 2.5 wt.%. Sodium caseinate can be used as well, and typically in higher concentrations of from 1 to 40 wt.%.

In a further aspect of the invention, the process uses the additional presence of fat. When fat is present in the composition used in the process, the fat induces structure at mesoscale level, in addition to the anisotropy at micro-and macroscale that was already present in a protein-water system. Fat may be present in the suspension in amounts up to 30 wt.% and sometimes even higher. Preferably, the amount of fat is less than 25 wt.%, more preferred less than 20 wt.%.

Suitable fats include all kinds of vegetable and animal fats. Preferred animal fats include milk fat and especially cow's milk fat. Preferred vegetable fats include sunflower fat, soy bean fat, rapeseed fat, corn and maize fat and mixtures thereof. In a preferred embodiment a fat is used with an increased polyunsaturated fat to saturated fat (pufa/safa) ratio as compared to dairy fat. The fat used must be liquid during processing. Using fat as a second phase allows structuring at an additional length scale in hierarchical protein-fat materials compared to single phase protein. Concurrent enzymatic cross-linking using transglutaminase (TGA) allows fixation of the shear-induced structure. In the working examples the effect of shear rate, shear time and protein concentration is shown on the formation of anisotropic structures based on Ca-caseinate and palm fat by applying simple shear and enzymatic cross-linking using TGA. The Ca-caseinate-fat structures were investigated with confocal scanning laser microscopy (CSLM) and scanning electron microscopy (SEM). Small and large deformations provided insight in the linear viscoelastic (LVE) properties, including creep behavior, and tensile properties respectively of the unique Ca-caseinate-fat materials.

More in detail, for the test system based on calcium caseinate dispersions and palm fat hierarchical fibrous materials are formed after enzymatic cross-linking under well-defined deformation. Prolonged shear time influenced the transition from fibrous materials in damaged structures accompanied by syneresis.

As to the effect of fat on structure formation, it is noted that the sheared and cross-linked fibrous Ca-caseinate structures containing fat showed little differences with the fibrous structures without fat based on SEM images. The estimated fiber thickness was more or less similar (~100-200 nm), which is in the range of casein micelles. However, with CSLM, an additional length scale in the protein-fat materials was observed, where protein bundles and elongated or deformed fat structures were visible. Bonds are created only in the direction of the shear flow, which is most likely already facilitated by the protein alignment induced by shearing. The presence of fat hinders the formation of covalent bonds in the direction perpendicular to the flow, thereby possibly enhancing the fibrous character of the material. The values of the mechanical properties of the fibrous sample containing fat were slightly higher compared to the fibrous protein sample without fat, suggesting reinforcement of the structure by the solid fat phase. The ratios of the mechanical properties measured parallel and perpendicular to the shear flow were similar to the fibrous sample without fat, having both a high yield stress ratio of about 8-9. In the absence of TGA, the fat droplets were larger and less deformed in the isotropic Ca-caseinate-fat material compared to the fat droplets present in the fibrous structures containing TGA. In the presence of TGA, the viscosity in the matrix will increase with increasing shearing time, leading to large viscous forces and consequently to droplet break-up. However, an increase in matrix elasticity will enhance elongation of the dispersed phase, and temporarily even orientation towards the flow direction. The viscosity ratio of the phases also influences structure formation during well-defined deformation: when the viscosity of the dispersed phase is lower than the viscosity of the matrix phase, which is likely the case during shearing and cross-linking Ca-caseinate and fat, droplets will get elongated during shearing. For the effect of protein concentration on structure formation it is noted that Ca-caseinate dispersions comprise protein aggregates that are comparable to casein micelles (~100-300 nm) in milk. These structural elements are most likely susceptible for alignment by shear when hydrodynamic forces dominate. TGA induces covalent bonds in the protein phase, thereby increasing the size of the casein clusters, which will enhance their susceptibility to align by shearing. Based on the fact that after shearing at 24 s$^{-1}$ an isotropic material was formed, it is assumed that the applied shear rate was too low to align the structural elements, *i.e.* the casein molecules or better: casein micelles, which were cross-linked at a relatively higher rate. Shearing at relatively high shear rates (> 120 s$^{-1}$) was needed for alignment and the creation of fibers. When the shear rate is too low, the protein matrix is more viscous due to shear thinning behavior. Therefore, it is likely that a more random covalent network is being formed, which will reach a percolated state rapidly. Shearing at a high shear rate (240 s$^{-1}$) resulted in enhanced fibrousness as reflected by the mechanical properties. This can be explained by an increase in micro phase separation due to the high shear rate, leading to more fibers, and the presence of small fat droplets in thin layers. Summarizing, the shear rate appears to be an essential tool to influence the creation and degree of fibrousness of fibrous materials based on Ca-caseinate and fat.

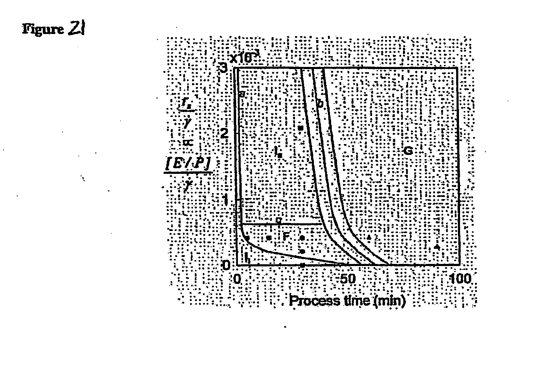

According to the invention, an interplay between cross-linking rate and shear rate determines the formation of fibrous structures. The results thereof are summarized in a diagram (Figure 21) in order to provide an overview of the types of structures that can be obtained. On the y-axis the solidification rate ($r_s$) and shear rate, yielding / $r_s$ /j$_s$, are plotted as function of process time. In the case of enzymatic cross-linking, $\pi_s$ scales with [E/P], whereas the shear rate is interpreted as a measure of alignment. All experimental data points for 30% Ca-caseinate-fat materials are displayed in the diagram, except for the 25% Ca-caseinate-fat materials in order to exclude protein concentration effects, which influence [E/P], but also the viscosity. The latter effects are expected to be highly non-linear and require further investigation. Based on the experimental data and theoretical considerations, four structural regions can be constructed in the diagram: (1) fibrous structures denoted with F, (2) 'granular' structures, which are the damaged and broken-down structures after over-shearing, denoted with G, (3) isotropic solid materials that are cross-linked into a solid but not aligned denoted with Is, and (4) isotropic liquid materials, which are materials that contain the same consistency as the starting material, denoted with Il. At a fixed [E/P]/ $\gamma$ ratio < 6.10$^{-4}$, three structural transitions can occur with increased process time. First, an isotropic liquid is formed at short process times when either $\gamma \rightarrow \infty$ or [E/P] $\rightarrow$ 0. Structural elements, which are prone to shear alignment when hydrodynamic forces dominate, will align at high shear rates, but will loose their orientation when no solidification is applied. However, at a very low solidification rate, the orientation will be fixated at longer time scales resulting in a fibrous material. This transition is indicated with line a. At even longer process times the aligned structure will be broken-up, resulting in a 'granular' structure accompanied with syneresis, which is depicted with the time-dependent transition line *b*. At a certain point when the solidification rate dominates the shear rate ([E/P]/ $\gamma$ > ~ 8.10$^{-4}$), a time independent transition occurs from fibrous materials to isotropic solids, illustrated with line c. When the $\gamma \rightarrow$ 0 or [E/P] $\rightarrow \infty$, three time-dependent transitions exist as well. At very short time scales an isotropic liquid is formed, which rapidly transforms into an isotropic solid with a random highly percolated network (line *a*). As the network strength increases with process time, a transition to the granular region (line *b*) can be expected due to break-down of the structure. With increased solidification rate, the transition from an isotropic solid into a granular material will occur at shorter times, which explains the asymptotic behaviour of line b. Similarly, line *a* is also an asymptote towards the y-axis. It must be noted that the values of [E/P]/ $\gamma$ are arbitrary and specific for the system under investigation. However, the existence of two time-dependent (*a*, *b*) and one time-independent (*c*) transition dividing the structural diagram into four distinct regions, of which the fibrous region is the narrowest one, is expected to be generic for the structuring process based on well-defined flow and solidification. The diagram provides an explanation why structuring processes, other than well-defined flow processes, do not result in highly aligned and fibrous structures. During mixing, biopolymers are subjected to relatively low shear rates, and occasionally to high peak shear rates. Due to the motion inherent during mixing, the macromolecules are continuously re-orientated, and eventually the total material will be treated at these high peak stresses, which can result in break-up of structures. Therefore, during mixing, the material will never reach the fibrous region as an isotropic solid (region Is), or even a granular structure (region G), will be formed rapidly. Another structuring process is extrusion during which biopolymers tend to align in slit dies due to laminar flow, while the structure is possibly fixated by di-sulphide bonds and hydrophobic interactions during cooling. The degree of fibrousness is largely determined by the cooling rate and the length of the slit die, which is equivalent to the solidification rate and process time respectively. Alignment at molecular scale was not reported for extruded fibrous materials based on proteins. The high pressure needed to push material through the die in combination with high temperatures leads to high shear stresses onto the material inside the extruder, resulting in severe protein damage and risk of syneresis.

The novel structuring process of the invention based on well-defined shear flow and enzymatic cross-linking leads to highly fibrous structures on macro- and microscale in dense Ca-caseinate dispersions. The presence of fat induced an additional length scale on mesoscale level, as bundles (~ 40 $\mu$m) of protein fibers (~ 100-200 nm) were separated by layers of fat and deformed fat droplets (~ 10 $\mu$m). Both shear time and shear rate highly affect the formation of fibrous structures. For 30% Ca-caseinate, fibrous structures were already observed after 5 min of shearing at 120 s$^{-1}$, but break-up of the fibrous structure was observed after prolonged shearing for 60 min. In the case of 25% Ca-caseinate, break-up was observed sooner as the relative cross-linking rate was increased in this system. A low shear rate (24 s$^{-1}$) yielded an isotropic structure, whereas shearing at a high shear rate (240 s$^{-1}$) resulted in a higher degree of fibrousness. The LVE properties and creep behaviour provided insight in the effect of covalent bonds induced by the enzyme during structure formation regardless of their orientation. Tensile tests showed that covalent bonds were formed in the shear flow direction.

Fibrous structures are formed due to a combination of initial product properties, which require structural elements that are prone to alignment by shear, and well-defined process conditions, implying linear shear flow and solidification of the aligned structures.

The invention will be described in more detail, while referring to the following non-limiting examples and the figures.

In the figures:

Figure 1 shows the shear cell device. The shear cell is based on a rheometer concept and a pilot scaleshear cell. The cone angle = 100°; angle between cone and plate (shearing zone) = 2.5°; $R_{plate}$ = 0.08508 m; $R_{plate, projected}$ = 0.06750 m; $R_{cone}$ = 0.07638 m; $R_{cone, projected}$ = 0.05851 m. The stationary cone and rotating plate are heated/cooled with water.

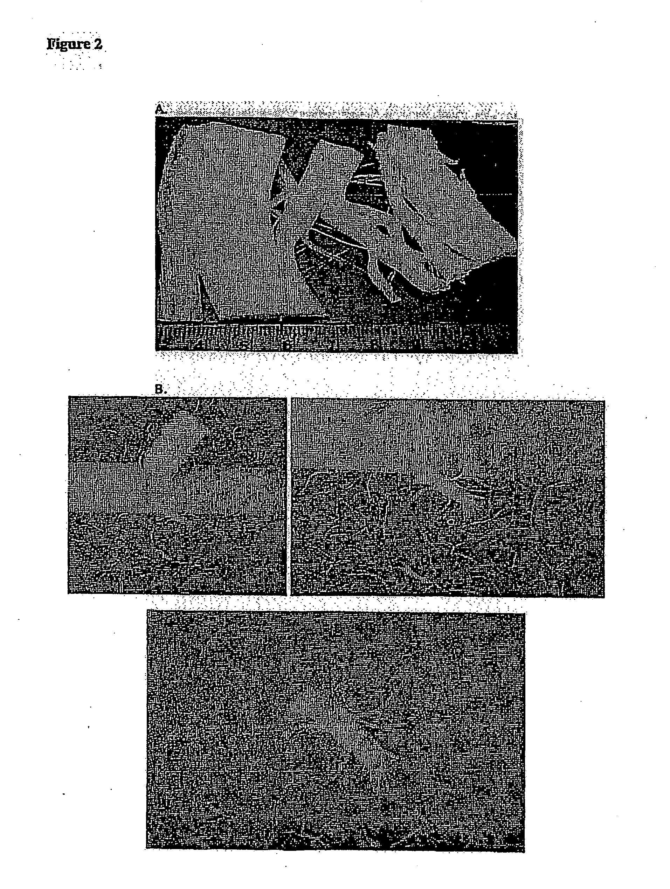

Figure 2 shows a picture of sheared and cross-linked 30% Ca-caseinate after a tensile test (A). Note the fiber that became visible after elongation during the measurement. After suspending the same sample for 1 day in demi-water, distinct fibers were visible (B).

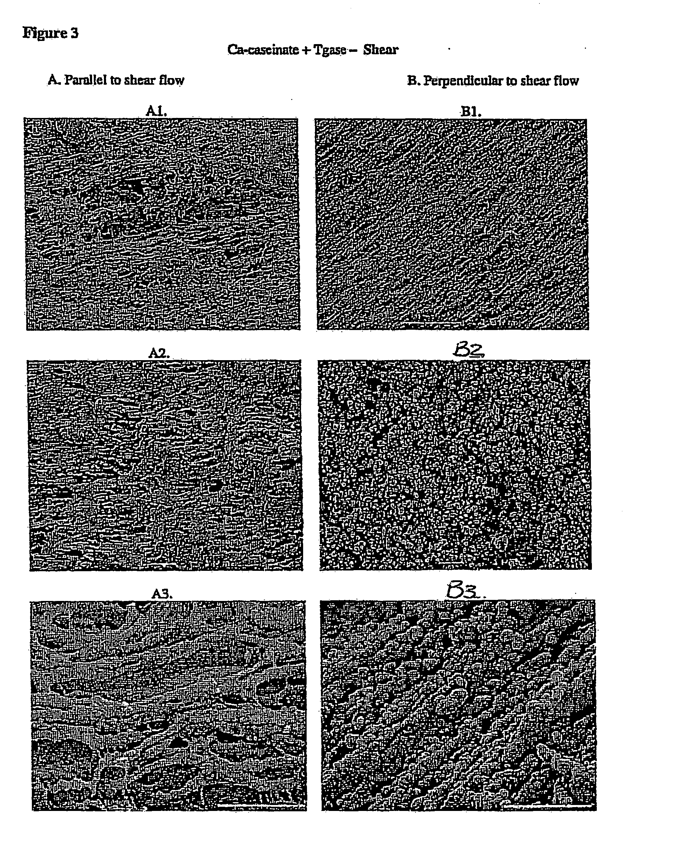

Figure 3 shows SEM images of fractured surfaces parallel (left column; velocity gradient - shearflow plane) and perpendicular (right column; velocity gradient - vorticity plane) to the shear flow exerted in the shear cell device of 30% Ca-caseinate and TGA (E:P = 1:20) sheared at 50°C and 50 rpm during 35min (C + TG - Shear). The scale bars in A3 and B3 denote 1 $\mu$m.

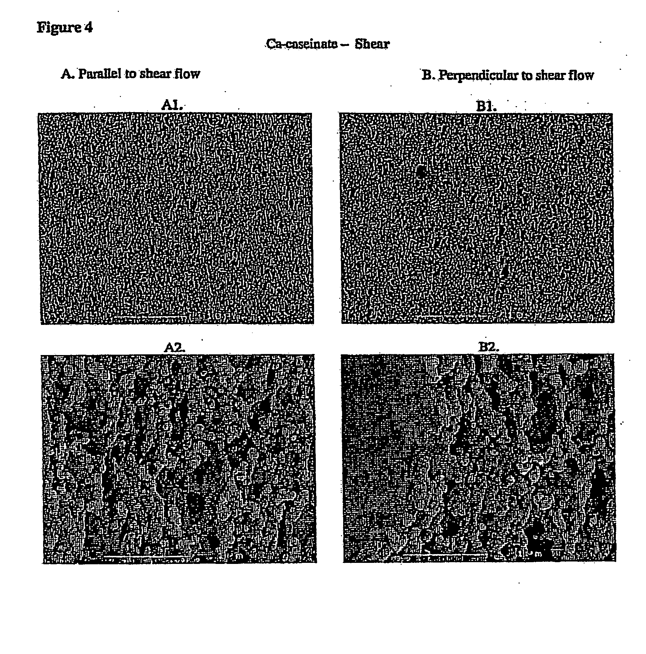

Figure 4 shows SEM images of fractured surfaces parallel (left column; velocity gradient - shearflow plane) and perpendicular (right column; velocity gradient - vorticity plane) to the shear flow exerted in the shear cell device of and 30% Ca-caseinate sheared at 50°C and 50 rpm during 35 min (C - Shear).

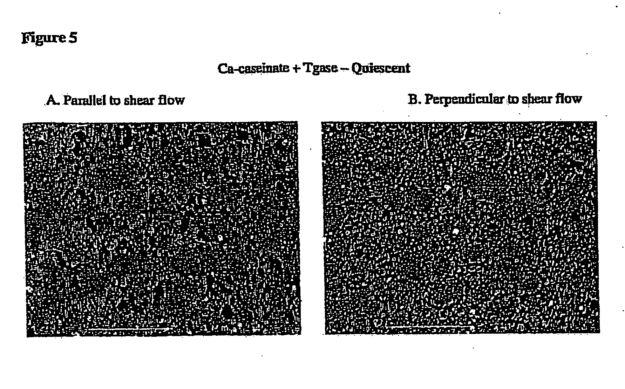

Figure 5 shows SEM images of fractured surfaces parallel (left column; velocity gradient - shearflow plane) and perpendicular (right column; velocity gradient - vorticity plane) to the shear flow exerted in the shear cell device of 30% Ca-caseinate, cross-linked by TGA (E:P = 1:20) under quiescent conditions at 50°C (C + TG - Quiescent).

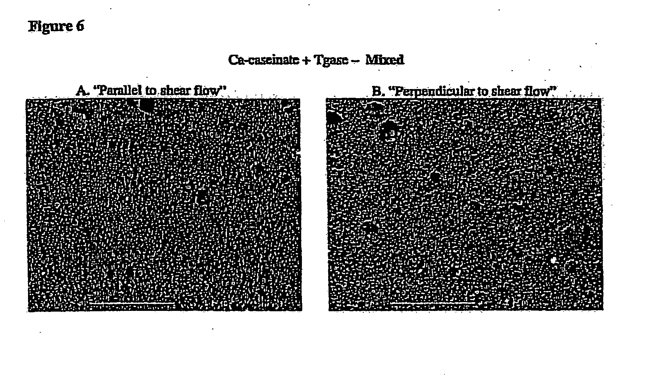

Figure 6 shows SEM images of fractured surfaces in imaginative "parallel" (left column) and "perpendicular" (right column) direction of 30% Ca-caseinate and TGA (E:P = 1:20) mixed in a mixer at50°C and 50 rpm during 35 min (C + TG - Mix).

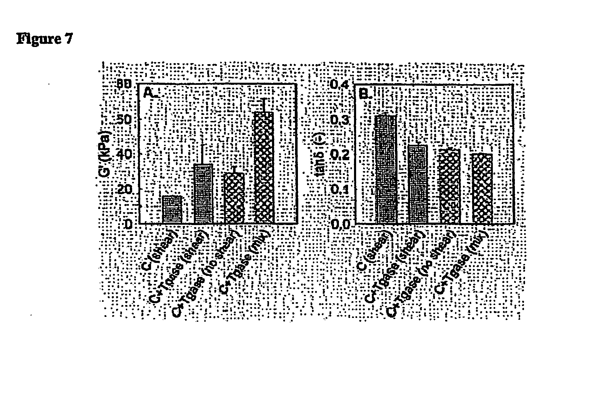

Figure 7 shows LVE properties of *G'* (A) and tan$\delta$ (B) with 95% confidence intervals of the various 30% Ca-caseinate structures. C = Ca-caseinate; TG = TGA; (no) shear = (non-)sheared in shear cell device; mix = mixed in mixer.

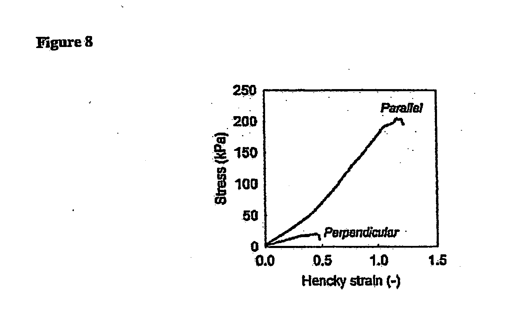

Figure 8 shows typical stress-strain curves of 30% Ca-caseinate and TGA (E:P = 1:20) sheared at 50°C and 50 rpm during 35 min (C + TG - Shear) that was elongated in the parallel and perpendicular direction to shear flow.

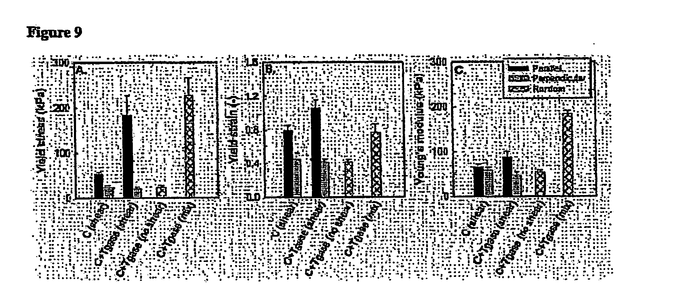

Figure 9 Tensile properties yield stress $\sigma$, yield strain $\varepsilon$ and Young's modulus E with 95% confidence intervals of the various 30% Ca-caseinate materials. C = Ca-caseinate; TG = TGA; (no) shear= (non-)sheared in shear cell device; mix = mixed in mixer.

Figure 10 shows a schematic overview of shear- and enzyme-induced anisotropy in dense Ca-caseinate : layered structure as observed after shearing Ca-caseinate (A) and fibrous structure as observed after shearing Ca-caseinate in the presence of TGA.

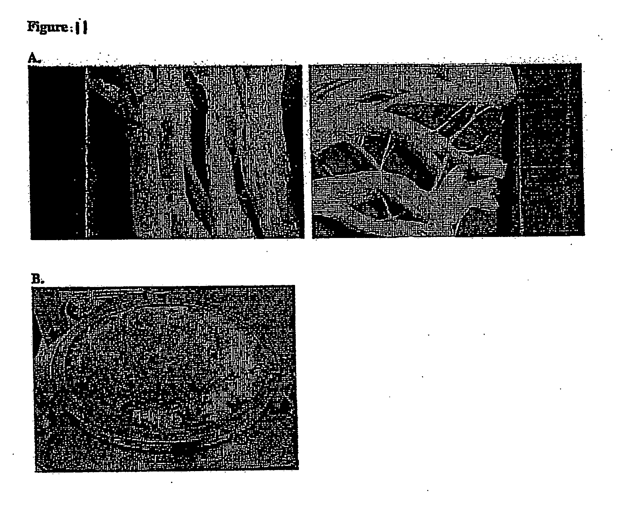

Figure 11 shows macrostructures of sheared and cross-linked 30% Ca-caseinate, 15% palm fat and TGA(1:20): A. Fibrous macrostructure obtained after shearing at 120 s$^{-1}$ for 30 min; B. Damaged macrostructure obtained at 120 s$^{-1}$ for 60 min.

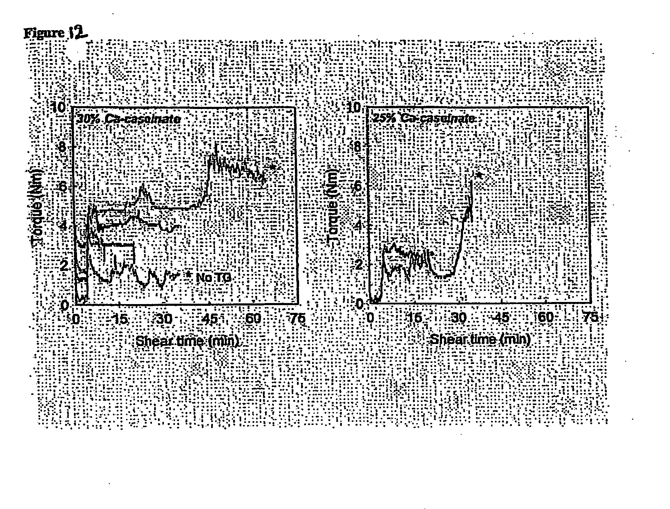

Figure 12 shows the effect of shear time on torque during shearing in the shear cell device for 30% Ca-caseinate and TGA (1:20) (left) and 25% Ca-caseinate and TGA (1:17) (right). All samples contained15% palm fat. The asterisk (*) denotes the materials that were not fibrous after shearing. No TG indicates the 30% Ca-caseinate sample without TGA.

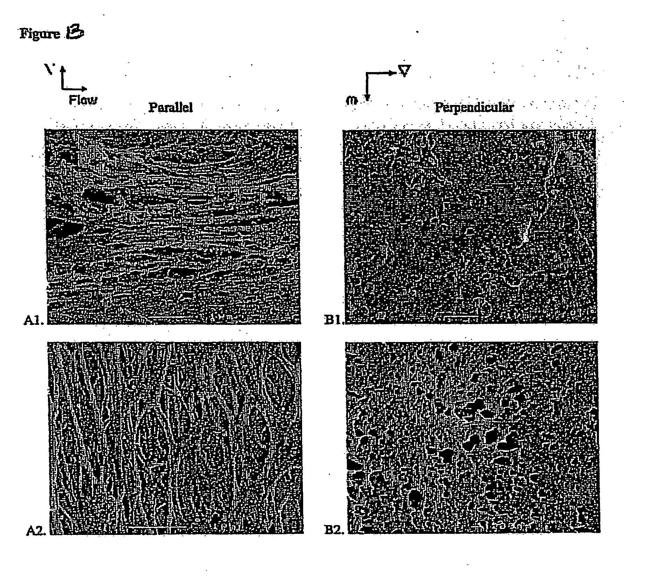

Figure 13 shows SEM images of fractured surfaces parallel (left column; velocity gradient - shear flowplane) and perpendicular (right column; velocity gradient - vorticity plane) to the shear flow exerted in the shear cell device of 30% Ca-caseinate and 15% palm fat cross-linked with TGA (1:20).

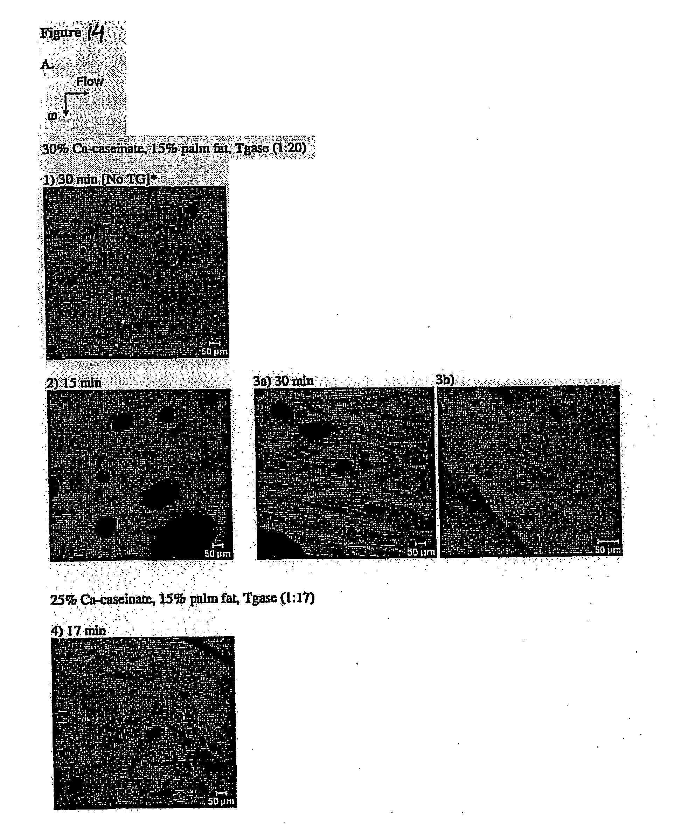

Figure 14A shows selected CSLM images of sheared and cross-linked 25% and 30% Ca-caseinate and 15% palm fat materials (TGA 1:17 and 1:20, respectively) obtained after shearing at various times at 120s$^{-1}$. The non-cross-linked 30% Ca-caseinate-fat material is included as well. The images are taken from the vorticity - shear flow plane. B. Average cumulative frequencies of the fat droplet diameter and deformation parameter *D* of selected Ca-caseinate-fat samples as determined with image analysis using at least 6 images at a magnification of 10x.

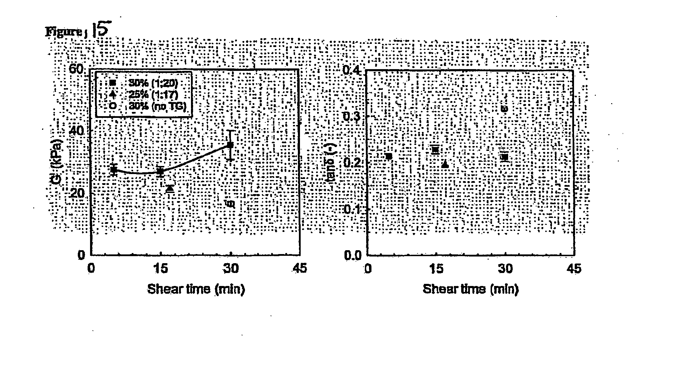

Figure 15 shows the effect of shear time on LVE properties *G'* and tan$\delta$ with 95% confidence intervals of 30% Ca-caseinate and TGA (1:20), 25% Ca-caseinate and TGA (1:17), and 30% Ca-caseinate without TGA. All samples contained 15% palm fat. Open symbols denote samples that were not fibrous after shearing.

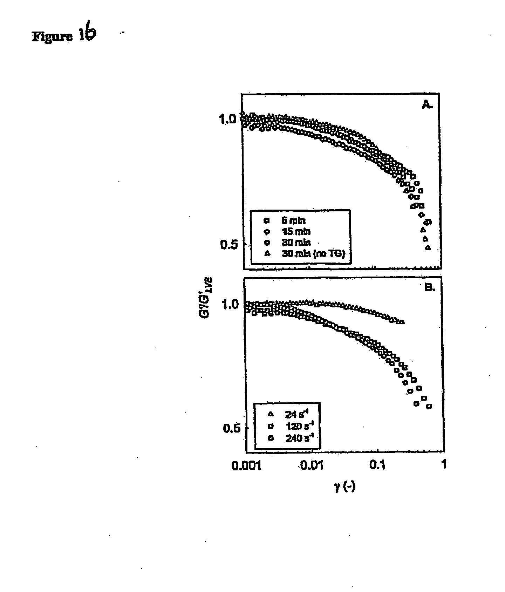

Figure 16 shows the effect of shear time (A.) and shear rate (B.) on normalized *G'* values with the G'value in the linear viscoelastic (LVE) region as function of the strain $\gamma$ as measured with strain amplitude sweeps of the materials consisting of 30% Ca-caseinate, 15% palm fat and TGA (1:20). The normalized curves are the average of duplicate measurements. The sample denoted with no TG was not cross-linked with TGA. Open symbols denote samples that were not fibrous after shearing.

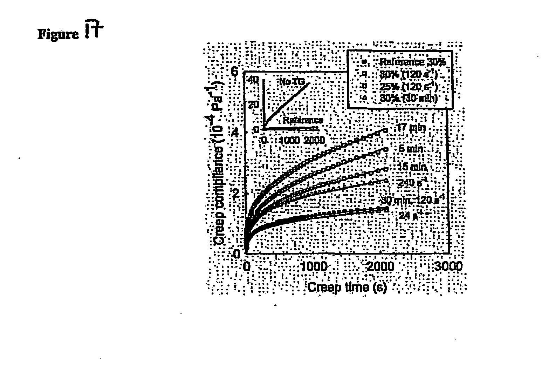

Figure 17 shows measured creep curves of 25% and 30% Ca-caseinate, 15% palm fat and TGA (1:17and 1:20, respectively) obtained after various shear treatments (data points). The lines represent the fitted curves with the 6-elementst Burgers model. The inserted graph displays non-cross-linked sheared Ca-caseinate-fat. Non-fibrous samples are denoted with an asterisk.

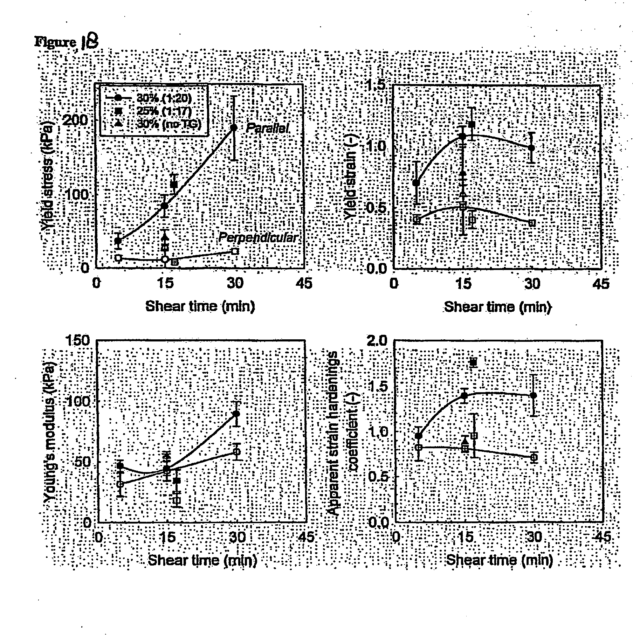

Figure 18 shows the effect of shear time on tensile properties yield stress $\sigma$, yield strain $\varepsilon$ and Young's modulus $E$ with 95% confidence intervals of 25% Ca-caseinate and TGA (1:17), 30% Ca-caseinate and TGA (1:20) or without TGA (no TG). All samples contained 15% palm fat. The tensile properties were measured parallel and perpendicular to the shear flow exerted in the shear cell device.

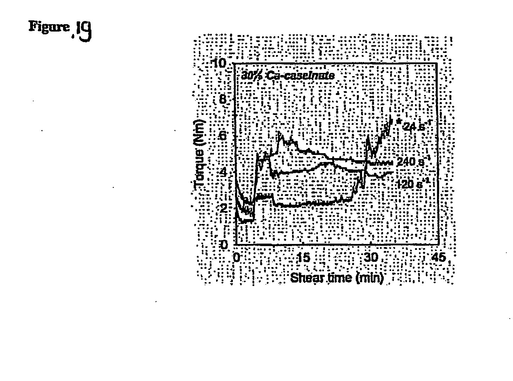

Figure 19 shows the effect of shear rate on the torque as function of time during shearing in the shear cell device for 30% Ca-caseinate and TGA (1:20). All samples contained 15% palm fat. The asterisk (*) denotes the material that was not fibrous after shearing.

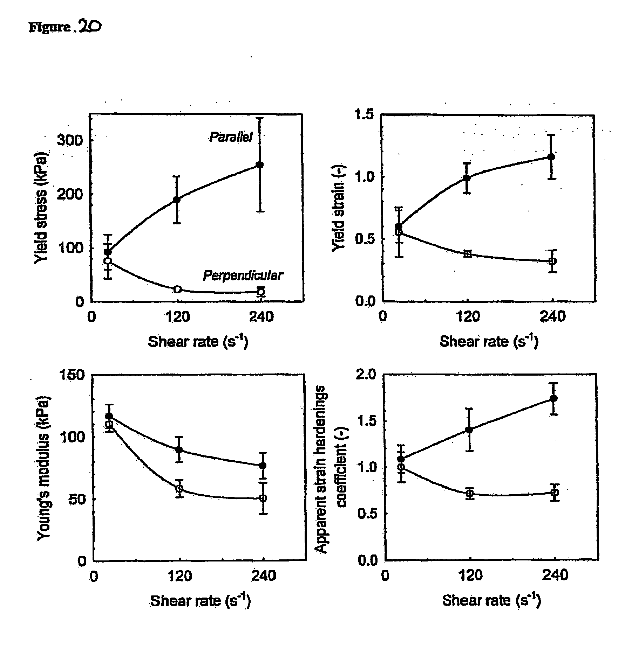

Figure 20 shows the effect of shear rate on tensile properties yield stress $\sigma$, yield strain $\varepsilon$ and Young's modulus $E$ with 95% confidence intervals of 30% Ca-caseinate with TGA (1:20) and without TGA (no TG). All samples contained 15% palm fat.

Figure 21 shows a diagram based on the ratio of solidification rate and shear rate as function of process time. Lines a, b and c represent transitions to four structural regions: (1) isotropic liquid materials (Il), (2) fibrous materials (F), (3) isotropic solid materials (Is) and (4) damaged "granular" materials (G). Circles, triangles and squares represent fibrous, granular and isotropic materials respectively based on 30% Ca-caseinate, 5% palm fat and TGA (1:20) obtained at various process conditions.

In the examples, percentages are percentages by weight drawn on the total weight of the composition.

In these examples, use is made of the following compounds:

Transglutaminase (TGA, herein-after): a microbial $Ca^{2+}$-independent transglutaminase (protein-glutamine:amine $\gamma$-glutamyl-transferase, EC 2.3.2.13) derived from *Streptoverticilium moberansae* (1% TGA, 99% maltodextrine, *ex* Ajinomoto Co. Inc., Tokyo, Japan) having an activity of 81-135 units-$g^{-1}$ according to manufacturer's specifications. A 20% (w/w in demineralized water) TGA solution was prepared freshly prior to experimental runs by mechanical stirring at room temperature for 1 h.

Calcium caseinate (Ca-caseinate): contained at least 88% protein according to the manufacturer's specifications (*ex* DMV International, Veghel, The Netherlands).

Palm fat was acquired from Barentz Raw Materials (Hoofddorp, The Netherlands). It has a melt trajectory from 20°C to 37°C, implying that the fat was liquid during processing (50°C), and solid during further analysis (20°C).

Nile Red (72485, Sigma Aldrich), a fluorescent dye for fat for Confocal Laser Scanning Microscopy, was added to the melted palm fat in a concentration of 0.1 g·L-1.

Dimethylsulfoxide (DMSO) and ethanol used for preparation of samples for SEM were of analytical grade (*ex* Sigma Aldrich, Zwijndrecht, The Netherlands).

In the examples, test data were obtained using the following methods:

Scanning electron microscopy: Micro- and nanostructural aspects of the Ca-caseinate materials were observed with a field emission scanning electron microscope (FESEM) at ambient temperature. Dry samples were prepared according to the modified method described by Muller et al. in Scanning 22 (2000) 295-303. Sheared Ca-caseinate samples were carefully cut in squares (< 10 x 10 mm), and immersed in DMSO (concentration range 15%, 30% and 50% v/v in demineralized water) for 60 min each. Excess of 50% DMSO was removed from the samples with filter paper. Slow freezing of the samples was performed in cold gaseous nitrogen above liquid nitrogen. Subsequently, the samples were brought into the liquid nitrogen, and freeze fractured on a brass table with a razorblade (single edge carbon steel, EMS Washington USA) and a hammer. Freeze fracturing was performed parallel and perpendicular to the shear flow that was exerted on the samples in the shear cell device (based on the shear flow - vorticity plane). The resulting fracture planes were the velocity gradient-shear flow plane and velocity gradient-vorticity plane, respectively. Herein, these directions and resulting fracture planes are defined as parallel and perpendicular, respectively. The mixed sample, having no clear shear direction, was treated similarly after defining an imaginative parallel and perpendicular direction. All the Ca-caseinate samples exhibited brittle fracture. After fracturing, samples were thawed in 50% DMSO for > 60 min, and subsequently re-hydrated to water through the reversed DMSO concentration range (60 min each). The samples were dehydrated in graded series of ethanol (10%, 30%, 50%, 70%, 90% v/v) to 100% ethanol (20 min each). Samples in the 100% ethanol were critical point dried with carbon dioxide (CPD 020, *ex* Balzers, Liechtenstein), and examined with a stereomicroscope to identify the fracture planes. Subsequently, the samples were glued on a sample holder using conductive carbon cement (Leit-C, *ex* Neubauer Chemicalien, Germany), and sputter coated with 20 nm Platinum (JFC 1200, *ex* JEOL, Japan). The fractured surfaces were analyzed with a FESEM (JEOL 6300 F, Tokyo, Japan) at room temperature at a working distance of 8 mm, with SE detection at 3.5 - 5 kV. All images were recorded digitally (Orion, 6 E.L.I. sprl., Belgium) at a scan rate of 100 seconds (full frame) at a size of 2528 x 2030, 8 bit. Noise reduction and resizing of the images was done with Adobe Photoshop CS.

Confocal scanning laser microscopy (CSLM): the mesostructure, defined as the structure between micro and macro length scale, of the processed Ca-caseinate-fat materials was observed with CSLM in the vorticity - shear flow plane. After storage at 4°C, protein-fat samples taken from the middle section of the shear cell were carefully cut, transferred to 2-well chambered coverglasses (*ex* Nunc, Naperville, II, U.S.A.) and analyzed with an inverted LSM 510 (*ex* Zeiss, Oberkochen, Germany). An Ar-ion laser (488 nm) and HeNe laser (543 nm) were used to excitate the samples. For the protein phase, an emission filter of 505-530 nm was applied, whereas a 600-650 nm filter was used for the fat phase. Images were digitally recorded with a 10x dry objective (N.A. 0.3, zoom 2x and 4x) and a 40x oil immersion objective (N.A. 1.3). Image analysis of the raw data images (512 x 512 pixels) of the fat phase was performed using the Image Toolbox of Matlab 7.0 (*ex* The Mathworks Inc., Natick MA, U.S.A.). At least 6 images per sample obtained at 10x magnification were used to determine the diameter size based on pixel area ($d = \sqrt{4\pi/area}$). Also, the deformation parameter $D$ was calculated from the length of maximum axis ($L_{max}$) and the minimum axis length ($L_{min}$) of an ellipsoidal: $D = (L_{max} - L_{min})/(L_{max} + L_{min})$. Based on cumulative distributions of the fat droplet diameter and D, average cumulative distributions were constructed.

Rheological properties: Linear viscoelastic (LVE) properties ($G'$ and $\tan\delta$) were determined in duplicate with dynamic oscillating strain amplitude tests with a stress-controlled Bohlin CVO (ex Bohlin Instruments Ltd., Cirencester, U.K.) at a constant frequency of 1 Hz and at a temperature of 20°C. Single frequency sweeps (0.01-100 Hz) were performed at a constant strain within the LVE region at 20°C. Creep tests were conducted in duplicate at 20°C at a steady stress level within the LVE region (< 350 Pa). The creep time was 2000 s. Serrated parallel plates (diameter 25 mm, gap 2 mm) were used in order to prevent slip. A chamber covering the sample was used to prevent evaporation. Before measuring, samples were rested for 5-15 min to allow relaxation of the stresses induced by sample loading. The mechanical spectra obtained were analyzed with a power law fit to the G'-frequency curves ($G' \propto \omega^n$). Creep curves were analyzed with the 6-element Burgers model, which proofed to be suitable to describe the viscoelastic properties of soft solid materials (see: Edwards et al., Rheologica Acta. 40 (2001) 142-153). The model comprises a Maxwell element with two Kelvin-Voigt elements in series:

$$J(t) = 1/G_1 + (1/G_2)[1 - exp(-tG_2/\eta_2)] + (1/G_3)[1 - exp(-tG_3/\eta_3)] + t/\eta_1$$

The instantaneous compliance $J_1$ equals $1/G_1$, viscous flow is represented by $t/\eta_1$, and the rest of the equation (two Kelvin-Voigt elements) stands for the retarded compliance. In the working examples, the inventors focused on $J$, $\eta_1$ and the retardation times $\tau_2 (= G_2/\eta_2)$ and $\tau_3 (= G_3/\eta_3)$ to discriminate between the various sheared and cross-linked materials.

Mechanical properties: A Texture Analyzer T2 (*ex* Stable Micro Systems Ltd., Surrey, U.K.) was used for large deformation tests. Uni-axial tensile tests were conducted with a constant deformation rate of 3 mm·s$^{-1}$ at room temperature within 2 h after creating the Ca-caseinate materials. Samples were cut into a rectangular shape (30 x 12 mm) having a thickness of 3-5 mm (measured for each individual sample). The length of the to-be-extended part was 15.2 mm. At least three measurements were performed on a fibrous protein sample in each direction, parallel and perpendicular to the shear flow (based on the shear flow - vorticity plane, thus the resulting fracture planes were the same planes as viewed with SEM). Due to the fibrous character of the samples, fracture occurred sometimes at once, and sometimes in a multi-stage way, leading to variations between measurements. The Hencky strain ($\varepsilon$), tensile yield stress ($\sigma$) and Young's modulus (E) were calculated as described by Gunasekaran & Ak, (2003) Cheese Rheology and Texture, CRC Press. The apparent strain hardening coefficient $n_{strain}$ was determined by applying a power law fit ($\sigma= k·\varepsilon^n$) on the $\sigma·\varepsilon$ curve in the measured $\varepsilon$-range of 30-100%. When $n_{strain}$ exceeds the value of 1, the sample exhibits strain hardening.

Example 1

A protein premix (pH 6.8 - 7.0) consisting of 30% w/w Ca-caseinate, TGA (enzyme-protein (E:P) ratio 1:20 based on weight) and demineralized water, was prepared in a kitchen mixer at low speed and at room temperature prior to processing. For preservation 1% (w/w) sodium benzoate (*ex* Sigma Aldrich, Zwijndrecht, The Netherlands) was added.
The protein premix prepared in a kitchen mixer was transferred to the pre-heated shear cell (shown in Figure 1 and described in detail in the description herein-above) that was kept at a constant temperature of 50°C. After filling the shear cell, the mixture was subjected to the following shear treatment: 4 min at 5 rpm (12 s$^{-1}$), then an increase from 5 to 50 rpm (12 to 120 s$^{-1}$) in 1 min, and 30 min at 50 rpm (120 s$^{-1}$). In case of a quiescent treatment, the mixture was subjected to 5 rpm for 30 s, and subsequently the shear cell was stopped (0 rpm) for 35 min.

Further, a Ca-caseinate sample was prepared in a mixing bowl (W-50) with counter rotating elements, which was attached to the Brabender Do-Corder, at the same rotational speed as the sheared samples prepared in the shear cell device.

(The protein content of the processed samples was determined by the Dumas method using a NA2100 nitrogen and protein analyzer (*ex* CE Instruments, Milan, Italy). The nitrogen-protein conversion factor was 6.38 (see: Grappin & Lefier, Proc. Int. Dairy Fed. Seminar (1993), Cork; and Guo et al., Int. Dairy J. 6(5) (1996) 473-483). The average measured protein content, which was 28.43% $\pm$ 1.12% within a 95% confidence interval, was in agreement with the aimed protein content of 30%. The mixed and cross-linked Ca-caseinate sample had a protein content of 35.39%, which was attributed to syneresis.)

After processing, the material was cooled in the stationary shear cell to approximately 12°C in ~10 min with a water bath.

The mixed material was not cooled but a sample was taken immediately at 50°C.

The processed materials were transferred to moulds consisting of two square parallel plates (100 x 100 mm), which provided a controlled sample height of 3 mm. Part of the material was used within 2 h for further analysis (tensile tests and sample preparation for SEM), and a part was stored in a refrigerator at 4°C until further analysis (protein content and LVE measurements).

As to the macrostructural aspects, it is noted that the cross-linking with TGA during shearing led to real fibrous macrostructures that could be torn apart along the direction of shear flow. The structures obtained were white and shiny. Figure 2 shows the sheared and cross-linked protein sample after a tensile test that was performed in the direction parallel to the shear flow in the shear cell. Individual macroscopic fibers estimated having a typical size of < 1 mm could be observed after dispersing a piece of sample for 1 day in demineralized water, shown in Figure 2B.

Shearing of 30% Ca-caseinate without TGA resulted in a remarkably layered structure with a subtle anisotropic character. After shearing solely the protein matrix, the opaque white structure could be peeled off in the direction of shear flow over length scales in the order of cm. Ca-caseinate that was cross-linked under quiescent conditions resulted in a firm protein gel without any observable alignment.

Finally, normal mixing of Ca-caseinate and TGA for 35 min led to syneresis and resulted in a compact protein gel. After syneresis, the protein content of the remaining sample was 35% instead of the added 30%. Based on the macrostructural observations, shear and cross-linking with TGA appeared to be essential for creating an anisotropic fibrous Ca-caseinate structure.

On the effect of shear and cross-linking on the microstructure, the following is noted. The micro- and nanoscale structures of the processed Ca-caseinate materials were studied with SEM. Figure 3A displays the SEM images of sheared and non-sheared cross-linked Ca-caseinate. Shear-induced alignment was visible in the microstructure parallel to the shear flow. Most of the non-sheared cross-linked protein structure was very compact, and did not reveal clear alignment.

The sheared and cross-linked protein structures also contained open spaces and air bubbles, which enables to view fibers with a clear orientation.

Figure 3A.3 is an example of fibers at the surface of an air bubble. In some cases, the fiber orientation deviated from the shear direction. Obviously, the fibers viewed with SEM were of a totally different scale than the fibers observed visually in the macrostructure, i.e. nm versus mm scale, which indicates a hierarchical fibrous structure. Perpendicular to the shear flow, two types of microstructures were observed, namely spherical domains of dense protein, which may represent the ends of fibers, and again aligned protein structures (Figure 3B). The latter alignment might be caused by chained protein particles, or by an optically deceiving projection of the observed velocity gradient-vorticity plane. However, alignment in this plane was not observed on a macroscale.

Based on the images, a typical fiber diameter of ~100-200 nm could be deduced.

The microstructure of sheared calcium caseinate without use of TGA showed large differences compared to the sheared and simultaneously cross-linked protein microstructures. On a macroscale, no fibers were visible, but a layered structure was formed that could be peeled off. At microscale, a subtle orientation could be deduced from the plane parallel to the shear flow (Figure 4A), which was less clear for the plane perpendicular to the shear flow (Figure 4B). The protein network appeared more porous compared to the cross-linked protein network, which may suggest that free water was located in those pores, or that shrinkage of fibers had occurred in the cross-linked material. The size of the protein domains was comparable to the size of the spheres that were present in the cross-linked protein network (~100-200 nm).

Figure 5 shows the SEM images of cross-linked Ca-caseinate under quiescent conditions. The microstructures of the fracture surfaces parallel (Figure 5A) and perpendicular (Figure 5B) to the imaginative shear flow resembled each other. One can observe compact areas (~0.5 $\mu$m) surrounded with less compact areas containing protein domains. TGA may have been present in these compact areas, and cross-linking could have led to such compactness accompanied by expelling free water, leading to slightly swollen and porous protein structures in between the compact areas.

Finally, mixed and cross-linked Ca-caseinate yielded a compact microstructure consisting of protein spheres of ~100 nm, shown in Figure 6. The compactness can be explained by the syneresis that occurred during mixing. No differences were observed between the randomly chosen "parallel" direction, and the corresponding perpendicular direction.

Summarizing, in the presence of TGA, simple shear induced strong anisotropy on a macroscale. Alignment on a microscale was also observed, but it was not always consistent with the direction of shear flow. Only the combined action of shear and TGA yielded anisotropic Ca-caseinate structures.

The material properties of the sheared and cross-linked Ca-caseinate structures as measured were the rheological and mechanical properties. The latter revealed anisotropic properties of the processed protein materials.

Figure 7 displays $G'$ and tan$\delta$ within the LVE region of the various Ca-caseinate samples. Enzymatic cross-linking increased $G'$ whereas tan$\delta$ was decreased, which is typical of structures where covalent bonds are introduced. No difference in $G'$ and tan$\delta$ between shearing and quiescent treatment of cross-linked Ca-caseinate was found. Thus, shearing did not affect the formation of covalent bonds. The mixed and cross-linked Ca-caseinate sample showed a larger $G'$ and slightly lower tan$\delta$ value, which can be explained by an effective higher protein concentration. The anisotropic behavior of the sheared and cross-linked Ca-caseinate samples was not found in the LVE properties. Only the presence of TGA resulted in distinct differences in $G'$ and tan$\delta$. Therefore, it can be concluded that the anisotropic fibers acted as an isotropic continuum at the length scale probed with small deformations.

Figure 8 depicts typical stress-strain curves of the tensile behavior of sheared and cross-linked Ca-caseinate in the two directions relative to the applied shear flow on the sample during processing. It is immediately clear that both the yield (maximum) stress and yield strain in the parallel direction, thus in the direction of the fibers, was much larger compared to the values in the perpendicular direction. Further, the curvature of the stress-strain curve for the sample elongated in the parallel direction showed strain hardening behavior, whereas this was not the case for the sample elongated in the other direction.

Figure 9 illustrates the tensile properties: yield stress $\sigma$, yield strain $\varepsilon$ and Young's modulus $E$ for the various Ca-caseinate samples that were extended until fracture. Based on these tensile properties, it is concluded that Ca-caseinate that was both cross-linked and sheared showed a significant degree of anisotropy because of the large differences between the properties measured in the direction parallel and perpendicular to the shear flow.

Sheared Ca-caseinate behaved anisotropically, which is evident by differences in $\sigma$ and $\varepsilon$ (difference in $E$ was not significant).

Cross-linked Ca-caseinate under quiescent conditions was not anisotropic, as observed visually and by SEM (Figure 5). The average values of $\sigma$, $\varepsilon$ and $E$ (Figure 9) coincide with the perpendicular values of cross-linked and sheared Ca-caseinate, which indicates that cross-linking during shearing had also occurred in the direction perpendicular to the shear flow.

Mixed and cross-linked Ca-caseinate showed no differences in the measured stress-strain curves of the samples elongated in parallel and perpendicular directions. Therefore, the average values of $\sigma$, $\varepsilon$ and $E$ indicate that the material was highly elastic (high $E$ value) and ductile (high $\sigma$ value).

Table 1 summarizes the ratios between the tensile properties measured in the direction parallel and perpendicular to the shear flow. As already shown, the anisotropic fibrous samples were much stronger in the parallel direction compared to the perpendicular direction, which was especially reflected by the yield stress ratio $\sigma_{parallel}/\sigma_{perpendicular}$ (*i.e.* ~9). The ratios of the yield strain and Young's modulus were ~2-3 for the anisotropic Ca-caseinate structures. Based on the ratio values of the tensile properties, the sheared Ca-caseinate in the absence of TGA showed slight anisotropy.

Table 1 (Ratio of the tensile properties yield stress $\sigma$, yield strain $\varepsilon$ and Young's modulus $E$ measured parallel and perpendicular to the shear flow. The anisotropic 30% Ca-caseinate samples are: sheared and cross-linked Ca-caseinate (C + TG - shear) and sheared Ca-caseinate (C - shear).) Ratio parallel/perpendicular

| | $\sigma$ | $\varepsilon$ | $E$ |
|---|---|---|---|
| C + TG - shear | 9.23 | 2.60 | 1.88 |
| C - shear | 2.27 | 1.79 | 1.13 |

Table 2 lists the values of the tensile properties, normalized with corresponding values of Ca-caseinate samples so that the effect of shear (sheared and cross-linked Ca-caseinate normalized with cross-linked Ca-caseinate under quiescent conditions), and of TGA (sheared and cross-linked Ca-caseinate normalized with sheared Ca-caseinate without TGA) could be deduced. Both shear and TGA affected the tensile properties in the parallel direction to a large extent, thus in the direction of the anisotropic microstructures. Moreover, considering the normalized yield stress values, the reinforcing effect of shear (in the presence of TGA) was almost twice as large as the effect of TGA only. This may be explained by a synergistic effect of shear and TGA.

Unfortunately, the effect of shear in non-cross-linked Ca-caseinate could not be determined, as the mechanical properties of Ca-caseinate without shearing and cross-linking could not be measured due to the weak structure. The effects of both shear and TGA were negligible for the normalized tensile properties in the perpendicular direction, since the normalized values were close to 1.

Table 2 (Normalized tensile properties yield stress $\sigma$, yield strain $\varepsilon$ and Young's modulus E for the measured parallel and perpendicular direction. The sheared and cross-linked Ca-caseinate sample (C + TG - shear) was normalized with cross-linked Ca-caseinate under quiescent conditions (C +TG - no shear), and with the sheared Ca-caseinate (C - shear), leading to the effect of shear and TGA, respectively.)

|  | Parallel, normalized | | | Perpendicular, normalized | | |
|---|---|---|---|---|---|---|
|  | $\sigma$ | $\varepsilon$ | *E* | $\sigma$ | $\varepsilon$ | *E* |
| Effect shear | 7.74 | 2.59 | 1.58 | 0.84 | 1.00 | 0.84 |
| Effect TGA | 3.54 | 1.34 | 1.35 | 0.93 | 0.87 | 0.81 |

$$(\text{Effect shear} = (C+TG)_{\text{shear}}/(C+TG)_{\text{no shear}}; \text{Effect TGA} = (C+TG)_{\text{shear}}/(C)_{\text{shear}})$$

Table 3 provides an overview of the most important macro-, microstructural and mechanical features of the discussed Ca-caseinate structures after shearing, mixing, or quiescent treatment, with or without TGA. It can be seen that both shear and enzymatic cross-linking were essential for the formation of fibrous Ca-caseinate materials. In Table 3, macro-, microstructural and mechanical aspects are denoted with "macro", "micro" and "mechanical".

Table 3

|  | Property | Ca-caseinate | Ca-caseinate + TG |
|---|---|---|---|
| Shearing | Macro | Layered | Fibers < 1 mm |
|  | Micro | Hardly orientation, protein domains -~60-120 nm | Fibers ~100-200 nm |
|  | Mechanical | Slightly anisotropic | Strongly anisotropic |
| Quiescent | Macro | Isotropic, grainy* | Isotropic |
|  | Micro |  | Protein domains ~50-100 nm and patches ~200-700 nm |
|  | Mechanical |  | Isotropic |
| Mixing | Macro |  | Fibers < 1 mm |
|  | Micro |  | Protein domains 100 nm |
|  | Mechanical |  | Isotropic |
| *Sample was not cohesive enough to perform SEM and mechanical analysis. | | | |

Example 2

A protein containing solution or dispersion was prepared according to the method described in Example 1, be it that the protein premix may contain either 25% or 30%(w/w) Ca-caseinate. The absolute enzyme concentration $[E_0]$ were equal for both Ca-caseinate concentrations, leading to enzyme: protein ratios (E:P) of 1:20 and 1:17 for the 30% and 25% Ca-caseinate solutions, respectively.

During processing (50°C), Nile Red (72485, Sigma Aldrich), a fluorescent dye for fat for Confocal Laser Scanning Microscopy, was added to the melted palm fat in a concentration of 0.1 g·L-1. Of this undiluted solution, 15% v/v was shortly mixed by hand with an appropriate amount of the protein premix prior to transferring the protein-fat mixture to the shear cell device.

The combined protein-fat premix was transferred to the pre-heated (50°C) shear cell device. After filling the shear cell, the mixture was subjected to the following shear treatment: 4 min at 5 rpm (12 s$^{-1}$), then an increase in one minute from 5 rpm to the desired rpm value (10, 50 or 100 rpm, which are equivalent to 24, 120 and 240 s$^{-1}$, respectively) for a set duration. This set duration will be referred to as the shear time. After processing, the material was cooled in the stationary shear cell to approximately 12°C in ~10 min. The measured torque curves were calibrated according to the measured torque value at t = 0.

The processed materials were transferred to moulds consisting of two square parallel plates (100 x 100 mm), which provided a controlled sample height of 3-5 mm. Part of the material was used within 2 h for further analysis (tensile tests and sample preparation for SEM), and a part was stored at 4°C prior to further analysis (CSLM, LVE and creep measurements).

The process conditions and material composition determined whether a fibrous material from Ca-caseinate and fat was formed or not. Therefore, the effect of shear rate, shear time and protein concentration will be discussed in terms of the processing aspects and the consequent structural properties at various length scales.

As to the effect of shear time and protein concentration on Ca-caseinate-fat structures, it is noted that only enzymatic cross-linking in combination with shearing led to fibrous Ca-caseinate-fat structures. The presence of fat induced anisotropy at an additional length scale in the structures, thereby yielding hierarchical protein-fat structures. The formation of fibrous structures was time-dependent, showing a gradual transition from a fibrous structure into a damaged structure accompanied by syneresis when a certain shear time was exceeded.

Shearing of 30% Ca-caseinate and 15% fat in the presence of TGA at a fixed shear rate and shear time (120 $s^{-1}$ and 30 min) resulted in a fibrous macrostructure as shown in Figure 11A. The fibrous material could be easily separated by hand (fibers < 1 mm). In contrast, when Ca-caseinate and fat were sheared in the absence of TGA, a homogenous macrostructure was observed without any orientation induced by the shear flow.

Figure 12 displays typical torque curves as function of (total) shear time during shearing Ca-caseinate and fat in the shear cell device. The presence of TGA increased the torque response due to the creation of covalent bonds in the protein phase. The measured torque for 25% Ca-caseinate was slightly lower compared to 30% Ca-caseinate. Even though the composition of the cross-linked samples was similar (30% Ca-caseinate, 15% fat and (1:20) TGA), the torque curves show some variation. Nevertheless, a clear trend was observed: after a relatively constant torque value, the torque suddenly increased for both 30% and 25% Ca-caseinate after 45 min and 30 min (total shear time) respectively, suggesting a drastic change in product properties. The samples corresponding with these curves were damaged structures and expelled liquid (syneresis) was present as displayed in Figure 11B. At first sight, the structures did not appear fibrous, but after careful examining, some fibrous pieces could still be observed. The transition from a fibrous to a damaged structure is an uncontrolled process. A duplicate treatment of shearing at 120 $s^{-1}$ for 30 min of 25% Ca-caseinate-fat resulted in a less damaged macrostructure, with clear fibrous parts and only some syneresis.

Concluding, only at specific shear time conditions, depending on the protein concentration, fibrous structures could be obtained.

As to the microstructure, the SEM images in Figure 13 illustrate the microstructure of 30% Ca-caseinate and fat after shearing and cross-linking using TGA (1:20). The differences between the planes parallel (Figure 13.A1-A2) and perpendicular (Figure 13.B1-2) to the shear flow are very distinct for the simultaneously sheared and cross-linked material. Compact fibers were formed in the direction parallel to the shear flow with a typical fiber size of ~100-200 nm. At open spaces in the structure or in the inner surface of air bubbles, the fibers could be better distinguished. The direction of fibers in the inner surface of air bubbles sometimes differed from the shear direction indicating local disturbances of the shear flow, as shown in Figure 13.A2. Perpendicular to the shear flow, some protein particles and some "molten" structures (Figure 13.B2) were observed in which the protein seemed covered by the fat phase. Several fat globules were found in the structure, but overall only small amounts of fat could be found by SEM, which could be attributed to the length scale observed with SEM (depending on the magnification employed). In addition, the preparation method of the samples for SEM, such as immersing the caseinate-fat structures in organic liquids (DMSO, ethanol), caused probably loss of fat.

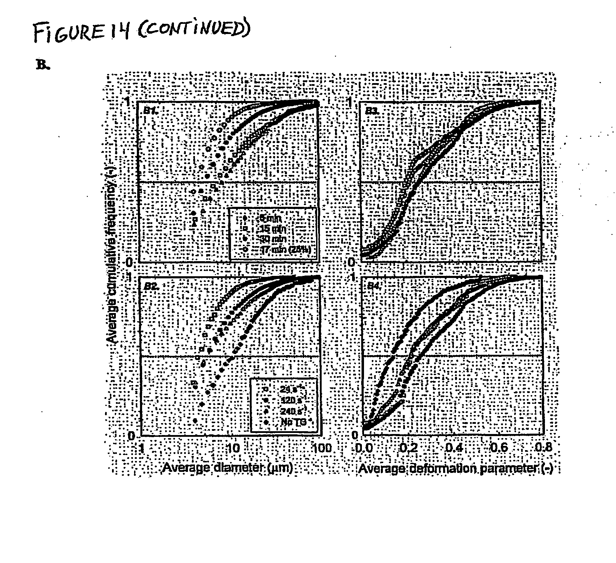

On a mesostructural level, CSLM images of sheared and cross-linked 30% Ca-caseinate reveal that the presence of the fat phase induced anisotropy at an additional length scale, making the structures even more hierarchical. Figure 14.A3 distinguished two types of fat structures in the 30% Ca-caseinate-fat materials obtained after 30 min shearing at 120 $s^{-1}$. Relatively small and large dispersed fat droplets were observed as well as fat layers elongated in the shear direction. Based on several independently processed samples, it could be observed that fat was mostly present in droplet form, but also in a deformed state based on the deformation parameter (D) values (Figure 14.B3-4). Very small fat droplets caused a certain degree of structure in the protein phase with an orientation parallel or inclined to the shear direction. A typical protein layer thickness of ~ 40 $\mu$m (thus consisting of ~200 single protein fibers), and fat layer thickness of ~ 10 $\mu$m can be estimated.

Figure 14.A1 shows the isotropic mesostructure of sheared 30% Ca-caseinate and fat without TGA consisting of a continuous protein phase with dispersed fat droplets. The (maximum) average cumulative distributions of the fat droplet diameter and deformation parameter D indicate that without TGA, the fat droplets were larger in size and less deformed compared to the fibrous structures containing TGA (Figure 14.B2-4).

The effect of shear time (15 and 30 min) at a constant shear rate of 120 $s^{-1}$ for 30% Ca-caseinate is illustrated in Figure 14.A2-3. After 5 and 15 min of shearing of 30% Ca-caseinate and fat, fibrous macrostructures were already observed by eye. However, except for some fat droplet orientation this is not evident from the CSLM image as shown for 15 min of shearing, compared to the reference sample that was sheared for 30 min. The black areas in the CSLM image obtained after 15 min of shearing indicate that air inclusions were present in this sample, which was also observed for 5 min of shearing. The fat droplet diameter decreased with increased shearing time, whereas $D$ showed little variation (Figure 14.B1-3).

When decreasing the protein content to 25% (E:P increased to 1:17), already after 17 min of shearing a fibrous macrostructure was created, which exhibited alignment of finely dispersed fat droplets as shown in Figure 14.A4. The droplets were smaller compared to droplets in the structures with higher protein content (Figure 14.B1), and no fat layers were observed. Concluding, the development of the mesoscale fat structures evolves during a narrow window of shearing times, i.e. between 15 and 60 min for 30% Ca-caseinate. A decrease in protein concentration even reduces this process window of shearing times for obtaining fibrous structures.

The LVE properties ($G'$ and tan$\delta$) of the Ca-caseinate-fat materials are plotted Figure 15 as function of shear time. For the fibrous 30% Ca-caseinate-fat structures, a moderate increase in G' was measured as function of shear time, thus cross-linking reaction time. The increase in G' can be explained by the increase in covalent bonds. The decrease in protein content to 25% Ca-caseinate resulted in a slightly lower value of G' of the 25% Ca-caseinate-fat material after 17 min of shearing was.

The sheared Ca-caseinate-fat structure in absence of TGA, which resulted in a homogeneous dispersed structure, shows a lower G' and higher tan$\delta$ value compared to the samples cross-linked with TGA. It is remarkable that tan$\delta$ already decreased after 5 min of shearing to the value that remained constant upon continued shearing. This indicates that $G''$ increased rapidly within 5 min of shearing, and further following the same trend as $G'$.

Table 4 summarizes the $n$-values derived from a power law fit to the G'-frequency curves of all samples.

Table 4: Values of n, extracted from a power law fit to G' as function of frequency ($G' \propto \omega^n$) with $R^2$ values for Ca-caseinate samples treated at various conditions. Non-fibrous samples are denoted with and asterisk.

| Ca-caseinate (%) | Ratio E:P | Shear time (min) | Shear rate ($s^{-1}$) | n (from $G' \propto \omega^n$)(-) | $R^2$ (-) |
|---|---|---|---|---|---|
| 30 | 0 | 30 * | 120 * | 0.22 * | 0.983 |
| | | | | 0.29 ($\omega < 1$Hz) | 0.991 |
| | | | | 0.19 ($\omega > 1$Hz) | 0.996 |
| 30 | 1:20 | 5 | 120 | 0.14 | 0.988 |
| 30 | 1:20 | 15 | 120 | 0.13 | 0.965 |
| 30 | 1:20 | 30 | 120 | 0.13 | 0.994 |
| 25 | 1:17 | 17 | 120 | 0.13 | 0.988 |
| 30 | 1:20 | 30 * | 24 * | 0.15 * | 0.909 |
| 30 | 1:20 | 30 | 240 | .14 | 0.987 |

The mechanical spectra in terms of $n$-value were hardly influenced by shear time or shear rate, and seemed to depend only on the composition of the materials. The presence of covalent bonds in the materials influenced the slope of the log-log plot when comparing the cross-linked samples with the non-cross-linked 30% Ca-caseinate sample, which behaved less like a solid material. Already 5 min of shearing in the presence of TGA induced the largest change in the $n$-value of the Ca-caseinate-fat material compared to the non-cross-linked material.

Figure 16A depicts the effect of shear time on the normalized $G'$ curves as function of strain, normalized with the corresponding $G'$values from the LVE region for 30% Ca-caseinate-fat samples. For the fibrous samples based on 30% Ca-caseinate, no clear trend can be deduced for the limit of the LVE region as function of shear time. The non-cross-linked homogeneous 30% Ca-caseinate sample showed a steeper decrease in the non-linear regime compared to the fibrous samples, which indicates that the homogeneous material was affected more abruptly at high strain values probably due to the presence of weaker non covalent bonds.

The creep curves, including the fits with the 6-element Burgers model, of the Ca-caseinate-fat materials are shown in Figure 17, which exhibit the typical shape of viscoelastic materials. The increase in cross-linking time, thus increase in covalent bonds, resulted in a decrease of the elastic compliance, which is inversely proportional to the elastic modulus. Further, non-cross-linked but sheared Ca-caseinate and fat behaved more viscous compared to the cross-linked materials, which is depicted in the insert in Figure 17.

Table 5 summarizes the fitted parameters $J_1$, $\eta_1$ and the retardation times $\tau_2$ and $\tau_3$ from the Burgers model.

Table 5 Fitted creep-parameters including the standard deviations from the 6-element Burgersmodel. The model was fitted to the creep curves that were measured at 20°C within the LVE region. Non-fibrous samples are denoted with and asterisk:

Table 5

| Ca-cas (%) | Ratio E:P | She ar time (min) | $\gamma$ (s⁻¹) | $J_1$ (10⁻⁵ Pa⁻¹) | $\eta_1$ (10⁻⁶ Pa.s) | $\tau_2 (=G_2/\eta_2)$ (s) | $\tau_3 (=G_3/\eta_3)$ (s) |
|---|---|---|---|---|---|---|---|
| 30 | - | 30* | 120* | 15.9 ± 0.7* | 0.8 ± 0.4* | 6122 ± 8241* | 127 ± 15* |
| 30 | 1:20 | 5 | 120 | 4.0 ± 0.2 | 11.3 ± 1.7 | 260 ± 11 | 11 ± 1 |
| 30 | 1:20 | 15 | 120 | 4.0 ± 0.5 | 15.5 ± 0.9 | 256 ± 13 | 10 ± 1 |
| 30 | 1:20 | 30 | 120 | 3.2 ± 0.9 | 27.7 ± 16 | 214 ± 17 | 8 ± 1 |
| 25 | 1:17 | 17 | 120 | 5.5 ± 0.05 | 10.1 ± 0.9 | 261 ± 12 | 9 ± 1 |
| 30 | 1:20 | 30* | 24* | 2.3 ± 0.4* | 29.6 ± 11.9* | 210 ± 34* | 8 ± 1* |
| 30 | 1:20 | 30 | 240 | 3.5 ± 0.5 | 26.0 ± 6.1 | 200 ± 28 | 8 ± 1 |

The large decrease in $J_1$ and retardation times, and increase in $\eta_1$ after 5 min of shearing and cross-linking compared to the non-cross-linked material clearly indicates that the presence of TGA had the largest effect on the creep parameters. The steep decline in retardation times indicates that the Ca-caseinate matrix was rapidly transformed by the enzyme from a more or less viscous protein matrix into an elastic material. The presence of covalent bonds resulted in less mobile molecules within the structures, and a larger resistance to flow at longer time scales as reflected by a rise in $\eta_1$. Further increase in shear (reaction) time had a subtle decreasing effect on $J_1$, $\tau_2$ and $\tau_3$. It must be noted that the parameters $G_2$, $G_3$, $\tau_2$ and $\tau_3$, which determine the retardation times, increased with increasing shearing time.

Figure 18 depicts the mechanical properties (yield stress $\sigma$, yield strain s, Young's modulus $E$ and apparent strain hardenings coefficient $n$) as function of the shear time for fibrous 25% and 30% Ca-caseinate-fat materials. The mechanical properties of the non-cross-linked 30% Ca-caseinate-fat material are also included in Figure 18. After already 5 min. of shearing at 120 s⁻¹, anisotropy was observed in the 30% Ca-caseinate-fat material as the mechanical properties parallel and perpendicular to the fiber direction showed differences. Further, the mechanical properties measured in the perpendicular direction remained more or less constant as function of shear time. This indicates that reinforcement of the fibrous structures through covalent bonds occurred mainly in the flow direction. The anisotropy, characterized by the yield stress in the parallel direction, increased drastically with increasing shear time for 30% Ca-caseinate and fat. The mechanical properties of 25% Ca-caseinate and fat, sheared for 17 min, were more or less similar to the properties of the 30% Ca-caseinate sample that was sheared for 15 min. The non-cross-linked material based on 30% Ca-caseinate and fat behaved as an isotropic material for all tensile parameters. Remarkably, the mechanical properties of the non-cross-linked isotropic material equaled more or less the mechanical properties of the fibrous materials measured perpendicular to the shear flow. This again implies that no covalent bonds were formed perpendicular to the shear flow. The Young's modulus started to increase after 15 min of shearing (30% Ca-caseinate), whereas the yield strain and strain hardenings coefficient increased in the first 15 min of shearing, and remained constant afterwards. In general, the fibrous 30% Ca-caseinate-fat materials became more ductile and showed strain hardening in the fiber direction (increase in yield stress and yield strain), whereas they remained brittle (low yield stress and yield strain) in the perpendicular direction.

Table 6 summarizes the effect of the shear time on the ratio of the mechanical properties measured parallel and perpendicular to the fiber direction, which can be interpreted as a measure of the fiber quality. An increase in shear time affected all four mechanical parameters of the fibrous 30% Ca-caseinate materials positively, of which the yield stress increased mostly. Remarkably, the largest yield stress ratio was found for the fibrous structure with lower protein content (25% Ca-caseinate).

Table 6: Effect of shear time and shear rate on the ratio of the tensile properties of fibrous and non-fibrous Ca-caseinate-fat materials measured parallel and perpendicular to the shear flow (at 120 s⁻¹) exerted in the shear cell device. Non-fibrous samples are denoted with and asterisk.

| Ca-cas (%) | Ratio E:P | She ar time (min) | Yield stress $\sigma_{//}/\sigma_{\perp}$ (-) | Yield strain $\varepsilon_{//}/\varepsilon\perp$ (-) | Young's modulus $E_{y\cdot //}/E_{y\cdot\perp}$ (-) | App. strain hardening $n_{8.//}/n_{8.\perp}$ (-) |
|---|---|---|---|---|---|---|
| 30 | - | 30* | 1.44* | 1.29* | 1.02* | 1.09* |
| 30 | 1:20 | 5 | 2.70 | 1.73 | 1.49 | 1.16 |
| 30 | 1:20 | 15 | 7.03 | 2.12 | 1.5 | 1.72 |

(continued)

| Ca-cas (%) | Ratio E:P | She ar time (min) | Yield stress $\sigma_{//}/\sigma_{\perp}$(-) | Yield strain $\varepsilon_{//}/\varepsilon\perp$(-) | Young's modulus $E_{y.\,//}/E_{y\cdot\perp}$(-) | App. strain hardening $n_{8.//}/n_{8.\perp}$(-) |
|---|---|---|---|---|---|---|
| 30 | 1:20 | 30 | 8.19 | 2.59 | 1.54 | 1.96 |
| 25 | 1:17 | 17 | 13.02 | 2.90 | 1.87 | 1.85 |

After investigating the effect of shear time at a constant shear rate, the influence of the shear rate at a fixed shear time of 30 min on the formation of fibrous structures based on 30% Ca-caseinate, 15% fat and TGA (1:20), was explored. The shear rate appeared to be a process parameter for controlling both the formation of fibrous structures and the degree of fibrousness.

Figure 19 displays the effect of three shear rates on the torque as function of shear time during processing 30% Ca-caseinate, fat and TGA in the shear cell. An increase in shear rate caused a higher torque response, which was valid up to a (total) shear time of 25 min. However, at 24 s$^{-1}$, the torque curve increased suddenly, similarly as was observed previously for 30 min and 60 min shearing at 120 s$^{-1}$ of 30% and 25% Ca-caseinate-fat respectively. In the two latter cases, damaged structures and syneresis were the result of over-shearing a fibrous structure. After shearing for 30 min at 24 s$^{-1}$, an isotropic macrostructure accompanied by some expelled fat and subtle syneresis was observed. Probably no alignment was induced in the Ca-caseinate-fat material at low shear rate prior to break down. It seems that the sudden increase in measured torque profiles may be indicative of either break-up or the formation of an isotropic structure during shearing, therewith expelling a water or fat-rich phase. Both shearing at 120 s$^{-1}$ (reference sample that was discussed previously) and 240 s$^{-1}$ resulted in fibrous materials, of which the latter appeared qualitatively more fibrous compared to the former. When comparing the low and intermediate shear rate, the average cumulative droplet diameter curve for the low shear rate (24 s$^{-1}$) indicated the presence of smaller sized fat droplets in the mesostructure, whereas the average cumulative curves of the D parameter were the same (Figure 14.B2-4). The mesostructure obtained at the highest shear rate of 240 s$^{-1}$ showed dispersed structures with random fat droplets as well as fat structures aligned in layers (~ 10 $\mu$m thick) in the shear flow direction. No clear effect of the shear rate on the diameter and D could be deduced when taking all the investigated shear rates into account. No variations in the LVE properties of the fibrous materials were found as the reaction time of TGA, suggesting that the number of covalent bonds was equal for each shear rate. At low shear rate, the isotropic material obtained had a slightly higher G'value, which may be explained by the presence of a more interconnected protein network as not all cross-links were created in the shear flow direction. Figure 16B, displaying the normalized G' curves as function of strain, shows that the limit of the LVE region of the non-fibrous sample (24 s$^{-1}$) was much higher compared to the LVE limit of the fibrous samples (120 and 240 s$^{-1}$), which implies that the strain limiting the LVE region could be used as a measure for anisotropy. The shear rate hardly affected the creep parameters as shown in Table 5.

Figure 20 summarizes the effect of shear rate on the mechanical properties. In general, the large 95% confidence intervals can be explained by the step-wise and gradual fracture of fibrous samples, especially parallel to the fiber direction. Based on the mechanical properties measured parallel and perpendicular to the shear flow, it can be concluded that the 30% Ca-caseinate-fat material obtained at a low shear rate (24 s$^{-1}$) behaved as an isotropic material. The Young's modulus of this sample confirmed that the material was very elastic compared to the fibrous materials created at higher shear rates. The yield stress, yield strain and apparent strain hardenings coefficient measured parallel to the fiber direction increased with increasing shear rate, whereas the Young's modulus decreased. The mechanical properties determined perpendicular to the flow direction slightly decreased with increasing shear rate in the transition from isotropic to anisotropic materials (*i.e.* between 24 and 120 s$^{-1}$). After the transition, the mechanical properties of the anisotropic materials determined perpendicular to the fiber direction were hardly affected by the shear rate.

When considering all process parameters (shear rate and shear time), it can be concluded that all the mechanical properties of the anisotropic fibrous materials measured perpendicular to the shear flow were similar and independent of the treatment. Moreover, these mechanical properties equaled the ones of the isotropic non-cross-linked 30% Ca-caseinate-fat material. This confirms that no covalent bonds were created in the vorticity - shear flow plane in the fibrous materials, which is partly hindered by the presence of fat. Table 7 summarizes the ratios of the mechanical properties of the fibrous materials measured parallel and perpendicular to the fiber direction. Based on these ratios, the 30% Ca-caseinate-fat material formed at the highest shear rate (240 s$^{-1}$) was the most fibrous, suggesting that the shear rate can be used to control the fibrousness of sheared and cross-linked protein-fat materials.

Table 7: Effect of shear rate on the ratio of the tensile properties of fibrous and non-fibrous 30%Ca-caseinate-fat materials measured parallel and perpendicular to the shear flow exerted in the shear cell-device (for 30 min). Non-fibrous samples are denoted with and asterisk.

| Ca-cas (%) | Ratio E:P | Shear rate (s) | Yield stress $\sigma_{//}/\sigma_{\perp}$ (-) | Yield strain $\varepsilon_{//}/\varepsilon_{\perp}$ (-) | Young's modulus $E_{//}/E_{\perp}$ (-) | App. strain hardening $n_{//}/n_{\perp}$ (-) |
|---|---|---|---|---|---|---|
| 30 | 1.20 | 24* | 1.22* | 1.08* | 1.06* | 1.09* |
| 30 | 1:20 | 120 | 8.19 | 2.59 | 1.54 | 1.96 |
| 30 | 1:20 | 240 | 14.18 | 3.58 | 1.52 | 2.42 |

Example 3

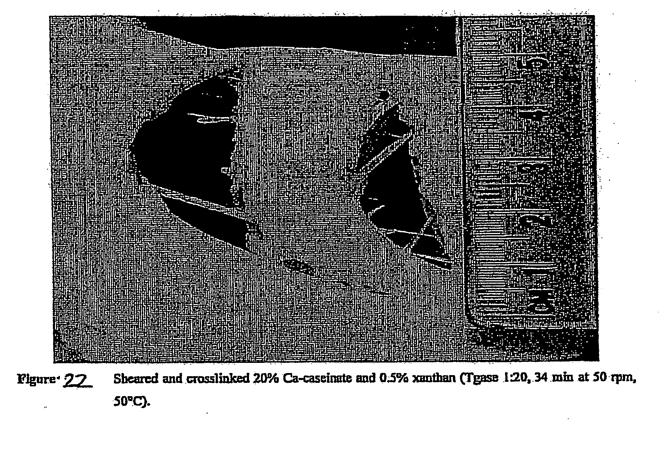

A 20% Ca-caseinate premix (containing per 100 g 72 g demi-water containing Na-benzoate + 0.5 g xanthan + 7.5 g TGA solution + 20 g Ca-caseinate) containing 0.5% xanthan (= sample 1) was prepared by first mixing xanthan and 1% Na-benzoate in demi-water for ~ 10 min at 30-40°C and subsequently for another ~50 min at room temperature. The 20% TGA solution was then added (to obtain a final ratio of enzyme to protein (E:P) of 1:20) to the xanthan solution and mixed shortly before adding this highly viscous dispersion, which contained several non-dissolved gel-like particles, to the protein. Also, a 30% Ca-caseinate premix with a lower amount of TGA (E:P = 1:40) and excluding Na-benzoate (= sample 2) was prepared. All components were mixed in a kitchen mixer at low speed and at room temperature before transferring the premix to the pre-heated shear cell (50°C). Both mixtures were sheared as follows: 4 min at 5 rpm, 1 min wherein the rpm increased from 5 to 50 rpm, and a set duration at 50 rpm, which were 34 min for the 20% Ca-caseinate-xanthan mixture and 15 min for the 30% Ca-caseinate sample. After shearing, the samples were cooled for 15 min until a temperature of ~ 12°C was reached. No analysis of the materials was performed.
Shearing of 20% Ca-caseinate-xanthan (sample 1) resulted in a fibrous macrostructure (Fig.22 ) having a firm texture. Shearing of 20% Ca-caseinate (with TGA 1:10 and 1:20, and in the presence of fat) in the absence of xanthan did not lead to fibrous materials.
The exclusion of the minor component Na-benzoate and the decrease of TGA (sample 2) yielded an isotropic material exhibiting major synersis (~ 25% of initial weight). The material is very elastic. Due to the yellow color, it resembles Na-caseinate after processing. A higher TGA concentration (1:20) in the absence of Na-benzoate resulted in a similar structure.

Example 4

In analogy with Example 1 blends of Ca-caseinate and Na-caseinate are subjected to simple shear. The resuls are given in Table 8. Table 8 provides an overview of the blends of Ca-caseinate and Na-caseinate with Na-benzoate (I ~ 70 mM) as analyzed using rheology and in the shear cell. For successful, fibrous, samples, the ratios of the tensile properties are given.

Table 8

| | Composition | | | Rheology | | Shear cell | | | | Texture analyzer | | Scaling rule |
|---|---|---|---|---|---|---|---|---|---|---|---|---|
| | Tot. prot. (g) | CA (g) | NA (g) | $\tau$ (s) | Shear rate (rpm) | Shear rate (s$^{-1}$) | Time (min) | Structure | Ratio stress (-) | Ratio strain (-) | | Predicted shear rate (s$^{-1}$) |
| Ref 30NA[a] | 30 | 0 | 30 | 0.004 5 | 50 | 120 | 35 | Iso | - | | | 1.6E+04 |
| **CN-9** | **30** | **28.5** | **1.5** | **8.00** | **50** | **120** | **20** | **Aniso** | **10.0** | **2.2** | | **9** |
| CN-10 | 30 | 29 | 1 | 6.37 | | | - | | - | | | 11 |
| Ref 30CA | 30 | 30 | 0 | 0.61 | 50 | 120 | 35 | Aniso | 9.2 | 2.6 | | |
| Ref 30CA new | 30 | 30 | 0 | 0.18 | 50 | 120 | 35 | Aniso | 9.2 | 2.6 | | |
| **CN-8 / Ref 25CA** | **25** | **25** | **0** | **0.72** | **50** | **120** | **20** | **Aniso** | **8.4** | **2.2** | | **102** |
| Ref 20CA | 20 | 20 | 0 | 0.19 | | | - | | - | | | 382 |

**Claims**

1. Process for the preparation of hierarchical fibrous food structures, comprising subjecting an edible protein suspension to simple shear flow and enzymatic cross-linking during shearing.

2. The process of claim 1 wherein the edible protein is or is based on caseins, soya and other vegetable proteins derivable from oleaginous seeds, vegetable proteins in general, whey protein concentrates, whey permeates, milk proteins, potato proteins and/or ovalbumines.

3. The process of claim 1 or claim 2, wherein the edible protein is based on casein, and preferably is calcium caseinate.

4. The process of claim 3, wherein the enzymatic cross-linking is carried out using transglutaminase.

5. The process of any of claims 1-4, wherein fat is present in the suspension, preferably in an amount up to 30 wt.%, more preferably up to 20 wt.%.

6. The process of any one of the preceding claims, further comprising the addition of polysaccharides, and preferably a polysaccharide selected from the group consisting of xanthan, carrageenan, galactomannan, guar gum, tara gum, carob bean gum, gum arabic, pectin, cellulose including carboxymethylcellulose, methylcellulose and hydroxypropylcellulose, and starches including modified starches, to the suspension.

7. The process of any one of the preceding claim, wherein the suspension further comprises of from 0.1 to 10 wt%, preferably 0.1 to 4 wt%, of a salt selected from sodium lactate, sodium citrate, sodium phosphate, and other salts having a comparable affinity for calcium binding.

8. The process of claim 7, wherein the salt is selected from the group consisting of sodium benzoate, sodium D-lactate, sodium citrate, and trisodium polyphosphate.

9. Fibrous hierarchical edible protein structure obtainable by the process of any one of claims 1-8, having anisotropy on microscale and on macroscale.

10. Loose fibrous particles having an anisotropic fiber form on microscale, obtainable by the process of any one of claims 1-8.

11. The fibrous structure of any of claims 9-10, based on caseinate cross-linked by transglutaminase.

12. The fibrous structure of any one of claims 9-11, having a yield stress ratio $\sigma_{parallel}/\sigma_{perpendicular}$ of at least 6, preferably at least 7 and most

13. The use of the structure of any one of claims 9-12 in the manufacture of food, preferably so as to use the hierarchical structure to create a meat- or fish-like structure.

14. A use according to claim 13, wherein the loose fibrous particles are used to adjust the viscosity and/or thixotropic and/or flow behaviour of the food.

**Patentansprüche**

1. Verfahren zur Herstellung hierachisch faseriger Nahrungsmittelstrukturen, umfassend, dass eine essbare Proteinsuspension einem einfachen Scherströmung und enzymatischer Vernetzung während des Scherens unterzogen wird.

2. Verfahren nach Anspruch 1, wobei das essbare Protein ist oder basiert auf Kaseinen, Soja und anderen pflanzlichen Proteinen, ableitbar von ölhaltigen Samen, pflanzlichen Proteinen im Allgemeinen, Molkeproteinkonzentraten, Molkepermeaten, Milchproteinen, Kartoffelproteinen und/oder Ovalbuminen.

3. Verfahren nach Anspruch 1 oder 2, wobei das essbare Protein auf Kasein basiert und bevorzugt Kalziumkaseinat ist.

4. Verfahren nach Anspruch 3, wobei die enzymatische Vernetzung unter Verwendung von Transglutaminase durchgeführt wird.

5. Verfahren nach einem der Ansprüche 1-4, wobei Fett in der Suspension anwesend ist, bevorzugt in einer Menge bis zu 30 Gew.-%, bevorzugter bis zu 20 Gew.-%.

6. Verfahren nach einem der vorhergehenden Ansprüche, ferner umfassend das Hinzufügen von Polysacchariden und bevorzugt eines Polysaccharids, ausgewählt aus der Gruppe bestehend aus Xanthan, Karagenan, Galactomannan, Guarkernmehl, Tarakernmehl, Johannisbrotkernmehl, Gummiarabikum, Pektin, Zellulose einschließlich Carboxymethylzellulose, Methylzellulose und Hydroxypropylzellulose und Stärken, einschließlich modifizierter Stärken, zu der Suspension.

7. Verfahren nach einem der vorhergehenden Ansprüche, wobei die Suspension ferner 0,1 bis 10 Gew.-%, bevorzugt 0,1 bis 4 Gew.-% eines Salzes, ausgewählt aus Natriumlactat, Natriumcitrat, Natriumphosphat und anderen Salzen mit einer vergleichbaren Affinität für Kalziumbindung, umfasst.

8. Verfahren nach Anspruch 7, wobei das Salz ausgewählt ist aus der Gruppe bestehend aus Natriumbenzoat, Natrium-D-Lactat, Natriumcitrat und Trinatriumpolyphosphat,.

9. Faserige, hierarchische, essbare Proteinstruktur, erhältlich durch das Verfahren nach einem der Ansprüche 1-8, mit Anisotropie auf Mikroskala und auf Makroskala.

10. Lose faserige Teilchen mit einer anisotropen Faserform auf Mikroskala, erhältlich durch das Verfahren nach einem der Ansprüche 1-8.

11. Faserige Struktur nach einem der Ansprüche 9-10, basierend auf Kaseinat, vernetzt durch Transglutaminase.

12. Faserige Struktur nach einem der Ansprüche 9-11 mit einem Fließspannungsverhältnis $\sigma_{parallel}/\sigma_{senkrecht}$ von mindestens 6, bevorzugt von mindestens 7 und am bevorzugtesten von mindestens 8.

13. Verwendung der Struktur nach einem der Ansprüche 9-12 bei der Herstellung von Nahrungsmitteln, bevorzugt so, dass die hierarchische Struktur verwendet wird, um eine fleisch- oder fischähnlichen Struktur zu schaffen.

14. Verwendung nach Anspruch 13, wobei die losen faserigen Teilchen verwendet werden, um die Viskosität und/oder das thixotrope Verhalten und/oder Fließverhalten der Nahrungsmittel anzupassen.

**Revendications**

1. Procédé pour la préparation de structures alimentaires fibreuses hiérarchiques, comprenant la soumission d'une suspension de protéine comestible à un flux de cisaillement simple et à une réticulation enzymatique pendant le cisaillement.

2. Procédé selon la revendication 1, dans lequel la protéine comestible est ou est basée sur des caséines, le soja et d'autres protéines végétales pouvant être dérivées de graines oléagineuses, des protéines végétales en général, des concentrés de protéine de lactosérum, des perméats de lactosérum, des protéines de lait, des protéines de pomme de terre et/ou des ovalbumines.

3. Procédé selon la revendication 1 ou la revendication 2, dans lequel la protéine comestible est basée sur la caséine et, de préférence, est le caséinate de calcium.

4. Procédé selon la revendication 3, dans lequel la réticulation enzymatique est réalisée en utilisant une transglutaminase.

5. Procédé selon l'une quelconque des revendications 1-4, dans lequel un lipide est présent dans la suspension, de préférence en une quantité jusqu'à 30 % en poids, de manière davantage préférée jusqu'à 20 % en poids.

6. Procédé selon l'une quelconque des revendications précédentes, comprenant en outre l'addition de polysaccharides,

EP 2 083 637 B1

et de préférence un polysaccharide sélectionné dans le groupe consistant en le xanthane, le carraghénane, le galactomannane, la gomme de guar, la gomme de tara, la gomme de caroube, la gomme arabique, la pectine, la cellulose comprenant la carboxyméthylcellulose, la méthylcellulose et l'hydroxypropylcellulose, et des amidons comprenant des amidons modifiés, à la suspension.

7. Procédé selon l'une quelconque des revendications précédentes, dans lequel la suspension comprend en outre de 0,1 à 10 % en poids, de préférence 0,1 à 4 % en poids, d'un sel sélectionné parmi le lactate de sodium, le citrate de sodium, le phosphate de sodium, et d'autres sels ayant une affinité comparable pour une liaison au calcium.

8. Procédé selon la revendication 7, dans lequel le sel est sélectionné dans le groupe consistant en le benzoate de sodium, le D-lactate de sodium, le citrate de sodium, et le polyphosphate trisodique.

9. Structure de protéine comestible hiérarchique fibreuse pouvant être obtenue par le procédé selon l'une quelconque des revendications 1-8, ayant une anisotropie à l'échelle microscopique et à l'échelle macroscopique.

10. Particules fibreuses lâches ayant une forme de fibres anisotropes à l'échelle microscopique, pouvant être obtenues par le procédé selon l'une quelconque des revendications 1-8.

11. Structure fibreuse selon l'une quelconque des revendications 9-10, basée sur du caséinate réticulé par une transglutaminase.

12. Structure fibreuse selon l'une quelconque des revendications 9-11, ayant un rapport de contrainte d'écoulement $\sigma_{parallèle}/\sigma_{perpendiculaire}$ d'au moins 6, de préférence d'au moins 7 et de la manière la plus préférée entre toutes d'au moins 8.

13. Utilisation de la structure selon l'une quelconque des revendications 9-12 dans la fabrication d'un aliment, de préférence afin d'utiliser la structure hiérarchique pour créer une structure de type viande ou poisson.

14. Utilisation selon la revendication 13, dans laquelle les particules fibreuses lâches sont utilisées pour ajuster le comportement de viscosité et/ou thixotrope et/ou d'écoulement de l'aliment.

Figure 1

1a

Stationary cone
Sample /
shearing zone
Rotating plate
Torque measurement

1b

Figure 2

A.

B.

**Figure 3**

Ca-caseinate + Tgase – Shear

A. Parallel to shear flow                    B. Perpendicular to shear flow

A1.

B1.

A2.

B2

A3.

B3.

**Figure 4**

Ca-caseinate – Shear

A. Parallel to shear flow

B. Perpendicular to shear flow

A1.

B1.

A2.

B2.

**Figure 5**

Ca-caseinate + Tgase – Quiescent

A. Parallel to shear flow    B. Perpendicular to shear flow

**Figure 6**

Ca-caseinate + Tgase – Mixed

A. "Parallel to shear flow"    B. "Perpendicular to shear flow"

**Figure 7**

Figure 8

Figure 9

**Figure 10**

Ca-caseinate    Ca-caseinate + Tgase

Figure: 11

A.

B.

Figure 12

Figure B

V

Flow

Parallel

V

m

Perpendicular

A1.

B1.

A2.

B2.

Figure 14

A.

Flow

ω

30% Ca-caseinate, 15% palm fat, Tgase (1:20)

1) 30 min [No TG]*

50 μm

2) 15 min

50 μm

3a) 30 min

50 μm

3b)

50 μm

25% Ca-caseinate, 15% palm fat, Tgase (1:17)

4) 17 min

50 μm

FIGURE 14 (CONTINUED)

B.

Figure 15

Figure 16

Figure 17

Figure 18

Figure 19

Figure 20

Figure 21

Figure 22    Sheared and crosslinked 20% Ca-caseinate and 0.5% xanthan (Tgase 1:20, 34 min at 50 rpm, 50°C).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4118520 A
- US 2830902 A
- US 2879163 A
- US 2682466 A
- NL 1019816 C
- WO 2005004624 A
- WO 2005004625 A
- EP 1085023 A
- EP 0821881 A
- EP 0340035 A
- EP 0420165 A
- EP 0610649 A

### Non-patent literature cited in the description

- **VEERMAN et al.** *J. Rheol,* 2005, vol. 49 (2), 355-368
- **THORN et al.** *Biochemistry,* 2005, vol. 44 (51), 17027
- **AGUILERA ; STANLEY.** *Food Rev. Int.,* 1993, vol. 9 (4), 527-550
- **CHEFTEL et al.** *Food Rev. Int,* 1992, vol. 8 (2), 235-275
- **THIEBAUD et al.** *Food Science And Technology-Lebensmittel-Wissenschaft & Technologie,* 1996, vol. 29 (5-6), 526-535
- **LIU et al.** *Food Sc. Techn. Int.,* 2005, vol. 11 (6), 463-470
- **TOLSTOGUZOV.** *J.A.O.C.S.,* 1993, vol. 70 (4), 417-424
- **PEIGHAMBARDOUST et al.** *J. Cereal Sc,* 2006, vol. 43, 183-197
- **VAN DEN EINDE et al.** *Polymer Degradation And Stability,* 2004, vol. 85 (1), 589-594
- **GALLANT et al.** *Food Microstructure,* 1984, vol. 3, 175-183
- **DOWNEY ; BURGESS.** *J. Food Techn,* 1979, vol. 14 (1), 21-31
- **DOWNEY ; BURGESS.** *J. Food Techn,* 1979, vol. 14 (1), 33-40
- **ANTONOV et al.** *Die Nahrung,* 1985, vol. 29 (1), 39
- **SUCHKOV et al.** *Nahrung-Food,* 1980, vol. 24 (9), 893-897
- **SUCHKOV et al.** *Nahrung-Food,* 1988, vol. 32 (7), 669-678
- **SUCHKOV et al.** *Nahrung-Food,* 1988, vol. 32 (7), 679-689
- Microstructural principles of food processing and engineering. **J.M. AGUILERA ; S.W. STANLEY.** Microstructural principles of food processing and engineering. Aspen Publishing, Inc, 1999, 186-187
- **P. WALSTRA.** Physical Chemistry of Foods. Marcel Dekker, 2003
- **C.W. MACOSKO.** Rheology, Principles, Measurements and Applications. VCH Publishers Inc, 1994, 27-2940, 70-75
- **PEIGHAMBARDOUST et al.** *Journal of Cereal Science.,* 2005, vol. 42 (1), 59-68
- **LORENZEN ; SCHLIMME.** *the Bulletin of the IDF,* vol. 332, 47-53
- **KIELER.** *Milchwirtschaftliche Forschungsberichte,* 1997, vol. 49 (3), 221-227
- *Nahrung-Food,* 1998, vol. 42 (3-4), 151-154
- **NONAKA et al.** *J. Food Sc.,* 1992, vol. 57 (5), 1214
- **MACOSKO, C. W.** Rheology: Principles, measurements, and applications. Wiley-VCH, 1994
- **DE KRUIF, C. G.** Supra-aggregates of casein micelles as a prelude to coagulation. *Journal Of Dairy Science,* 1998, vol. 81 (11), 3019-3028
- **LUCEY, J. A. ; SRINIVASAN, M. ; SINGH, H. ; MUNRO, P. A.** Characterization of commercial and experimental sodium caseinates by multiangle laser light scattering and size-exclusion chromatography. *Journal Of Agricultural And Food Chemistry,* 2000, vol. 48 (5), 1610-1616
- **DICKINSON, E. ; SEMENOVA, M. G. ; BELYAKOVA, L. E. ; ANTIPOVA, A. S. ; IL'IN, M. M. ; TSAPKINA, E. N. ; RITZOULIS, C.** Analysis of light scattering data on the calcium ion sensitivity of caseinate solution thermodynamics: Relationship to emulsion flocculation. *Journal Of Colloid And Interface Science,* 2001, vol. 239 (1), 87-97
- **FORSTER, S. ; KONRAD, M. ; LINDNER, P.** Shear thinning and orientational ordering of wormlike micelles. *Physical Review Letters,* 2005, vol. 94 (1), 17803-1780117804
- **MULLER et al.** *Scanning,* 2000, vol. 22, 295-303
- **EDWARDS et al.** *Rheologica Acta,* 2001, vol. 40, 142-153

- **GUNASEKARAN ; AK.** Cheese Rheology and Texture. CRC Press, 2003
- **GRAPPIN ; LEFIER.** *Proc. Int. Dairy Fed. Seminar,* 1993
- **CORK ; GUO et al.** *Int. Dairy J.,* 1996, vol. 6 (5), 473-483